(19) Europäisches Patentamt
European Patent Office
Office européen des brevets

(11) **EP 4 625 976 A1**

(12) **EUROPEAN PATENT APPLICATION**
published in accordance with Art. 153(4) EPC

(43) Date of publication:
01.10.2025 Bulletin 2025/40

(21) Application number: 23893880.7

(22) Date of filing: 22.11.2023

(51) International Patent Classification (IPC):
$H04N\ 19/105^{(2014.01)}$   $G09G\ 3/00^{(2006.01)}$

(52) Cooperative Patent Classification (CPC):
G09G 3/00; H04N 19/105; H04N 19/44;
H04N 19/523; H04N 19/593

(86) International application number:
PCT/CN2023/133139

(87) International publication number:
WO 2024/109790 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 CN 202211493480

(71) Applicant: Boe Technology Group Co., Ltd.
Beijing 100015 (CN)

(72) Inventors:
• CUI, Tenghe
  Beijing 100176 (CN)
• SHU, Long
  Beijing 100176 (CN)
• ZHANG, Qian
  Beijing 100176 (CN)

(74) Representative: Brötz, Helmut et al
Rieder & Partner mbB
Patentanwälte - Rechtsanwalt
Yale-Allee 26
42329 Wuppertal (DE)

(54) **VIDEO DATA PROCESSING METHOD AND APPARATUS, AND DISPLAY APPARATUS AND STORAGE MEDIUM**

(57)     A video data processing method and video data processing apparatus, and a display apparatus and a storage medium. The method comprises: for the current video block of a video, determining to perform coding and decoding by using a first intra-frame prediction mode(S101); and on the basis of the above determination, executing conversion between the current video block and a bitstream of the video, wherein in the first intra-frame prediction mode, a reference pixel used by the current video block excludes pixels of an adjacent block on an upper right side of the current video block (S102). By means of the method, partial decoding can be performed on a bit stream according to an actual area which needs to be displayed, thereby reducing the amount of resources used for decoding a non-displayed part, and thus improving the coding and decoding efficiency.

10

determining, for a current video block of a video, that a first intra-prediction mode is used for coding — S101

based on the determining, performing a conversion between the current video block and a bitstream of the video. In the first intra-prediction mode, reference pixels used by the current video block exclude a pixel from an adjacent block on an upper right side of the current video block — S102

Fig. 8

**Description**

TECHNICAL FIELD

Embodiments of the present disclosure relate to a video data processing method and a video data processing apparatus, a display apparatus, and a computer-readable storage medium.

BACKGROUND

Digital video functionality may be incorporated into a wide variety of devices, including digital televisions, digital live systems, wireless broadcast systems, laptop or desktop computers, tablet computers, electronic readers, digital cameras, digital recording devices, digital media players, video game devices, video game machines, smart phones, video teleconferencing devices, and video streaming devices, among others. Digital video devices may implement video coding techniques such as those described in the standards defined by MPEG-2, MPEG-4, ITU-T H. 263, ITU-T H. 264/MPEG-4, Part 10, advanced video coding (AVC), efficient video coding (HEVC), ITU-T H. 265/efficient video coding, and extensions to such standards. By implementing the foregoing video coding techniques, video devices can more efficiently transmit, receive, encode, decode, and/or store digital video information.

SUMMARY

At least one embodiment of the present disclosure provides a video data processing method, which includes: determining, for a current video block of a video, that a first intra-prediction mode is used for coding, and based on the determining, performing a conversion between the current video block and a bitstream of the video, wherein in the first intra-prediction mode, reference pixels used by the current video block exclude a pixel from an adjacent block on an upper right side of the current video block.

For example, in the at least one embodiment of the present disclosure, in the first intra-prediction mode, determining the reference pixels of the current video block based on an availability of a first adjacent block of the current video block.

For example, in the at least one embodiment of the present disclosure, the determining the reference pixels of the current video block based on an availability of a first adjacent block of the current video block, comprises: determining the availability of the first adjacent block based on a position of the first adjacent block and a position of the current video block.

For example, in the at least one embodiment of the present disclosure, the determining the availability of the first adjacent block based on a position of the first adjacent block and a position of the current video block, comprises: in response to the first adjacent block being on the upper right side of the current video block, determining that the first adjacent block is unavailable.

For example, in the at least one embodiment of the present disclosure, the determining the reference pixels of the current video block based on an availability of a first adjacent block of the current video block, comprises: in response to the first adjacent block being unavailable, determining pixel values of the first adjacent block based on other adjacent blocks of the current video block except the first adjacent block.

For example, in the at least one embodiment of the present disclosure, the determining pixel values of the first adjacent block based on other adjacent blocks of the current video block except the first adjacent block, comprises: determining the pixel values of the first adjacent block based on an upper left adjacent block and at least one upper adjacent block of the current video block.

For example, in the at least one embodiment of the present disclosure, the determining the pixel values of the first adjacent block based on an upper left adjacent block and at least one upper adjacent block of the current video block, comprises: in response to satisfying a first condition, determining the pixel values of the first adjacent block based on pixel values of a rightmost block of the at least one upper adjacent block and pixel values of the upper left adjacent block.

For example, in the at least one embodiment of the present disclosure, the determining the pixel values of the first adjacent block based on pixel values of a rightmost block of the at least one upper adjacent block and pixel values of the upper left adjacent block, comprises: determining the pixel values of the first adjacent block by performing linear interpolation using the pixel values of the rightmost block of the at least one upper adjacent block and the pixel values of the upper left adjacent block.

For example, in the at least one embodiment of the present disclosure, the first condition comprises that a difference between an average value of the pixel values of the upper left adjacent block and the pixel values of the rightmost block of the at least one upper adjacent block and an average value of pixel values of all blocks of the at least one upper adjacent block is less than a threshold value.

For example, in the at least one embodiment of the present disclosure, the threshold value is equal to bitdepth/2, where the bitdepth represents a bit depth of the video.

For example, in the at least one embodiment of the present disclosure, the determining the pixel values of the first adjacent block based on an upper left adjacent block and at least one upper adjacent block of the current video block, comprises: in response to not satisfying a first condition, determining the pixel values of the first adjacent block based on pixel values of the upper left adjacent block.

For example, in the at least one embodiment of the present disclosure, the determining the pixel values of the first adjacent block based on pixel values of the upper left adjacent block, comprises: setting the pixel values of the first adjacent block to be equal to the pixel values of the upper left adjacent block.

For example, in the at least one embodiment of the present disclosure, the first intra-prediction mode comprises a planar intra-prediction mode, a DC intra-prediction mode, an angular intra-prediction mode, or a multiple reference line intra-prediction mode.

At least one embodiment of the present disclosure provides a video data processing method, which includes: receiving a bitstream of a video; determining that a current video block of the video is coded using a first intra-prediction mode, and decoding the bitstream based on the determining, wherein in the first intra-prediction mode, reference pixels used by the current video block exclude a pixel from an adjacent block on an upper right side of the current video block.

For example, in the at least one embodiment of the present disclosure, the decoding the bitstream, comprises: in response to a current video frame of the video comprising a first display segment to be displayed and a second display segment not to be displayed, determining a to-be-decoded region corresponding to the first display segment, decoding the bitstream based on the to-be-decoded region.

For example, in the at least one embodiment of the present disclosure, the determining a to-be-decoded region corresponding to the first display segment, comprises: determining the to-be-decoded region, based on an encoding direction of the video, a partitioning direction between the first display segment and the second display segment, a total number of pixels in the first display segment, and a size of a coding unit of the video.

For example, in the at least one embodiment of the present disclosure, the determining the to-be-decoded region based on an encoding direction of the video, a partitioning direction, a total number of pixels in the first display segment, and a size of a coding unit of the video, comprises: in response to the encoding direction of the video being perpendicular to the partitioning direction, determining a total number of coding units for each line of the to-be-decoded region by applying a function to a ratio between the total number of pixels of the first display segment and the size of the coding unit.

For example, in the at least one embodiment of the present disclosure, the determining the to-be-decoded region based on an encoding direction of the video, a partitioning direction, a total number of pixels in the first display segment, and a size of a coding unit of the video, comprises: in response to the encoding direction being parallel to the partitioning direction, determining a total number of coding unit lines of the to-be-decoded region by applying a function to a ratio between the total number of pixels of the first display segment and the size of the coding unit.

For example, in the at least one embodiment of the present disclosure, the function is an up-rounding function.

At least one embodiment of the present disclosure provides a video data processing apparatus, which includes: a determination module configured for determining, for a current video block of a video, that a first intra-prediction mode is used for coding; and a performing module configured for, based on the determination, performing a conversion between the current video block and a bitstream of the video, wherein in the first intra-prediction mode, reference pixels used by the current video block exclude a pixel from an adjacent block on an upper right side of the current video block.

At least one embodiment of the present disclosure provides a video data processing apparatus, which includes: display apparatus, comprising a video data processing apparatus and a rollable screen, wherein the video data processing apparatus is configured to decode a received bitstream according to the video data processing method of any one of the embodiments described above and send decoded pixel values to the rollable screen for display.

For example, in at least one embodiment of the present disclosure, in response to the rollable screen comprising a display region and a non-display region in operation, the video data processing apparatus decodes the bitstream based on a size of the display region.

For example, in at least one embodiment of the present disclosure, further includes a rollable state judgment apparatus, wherein the rollable state judgment apparatus is configured to detect a size of a display region of the rollable screen and transmit the size of the display region to the video data processing apparatus such that the video data processing apparatus decodes the bitstream based on the size of the display region.

At least one embodiment of the present disclosure provides a video data processing apparatus, which includes: a processor; and a memory, comprising one or more computer program modules, wherein the one or more computer program modules are stored in the memory and configured to be executed by the processor, the one or more computer program modules comprising instructions for performing the video data processing method according to any one of the embodiments described above.

At least one embodiment of the present disclosure provides a computer-readable storage medium having stored thereon computer instructions, wherein the instructions, when executed by a processor, implement steps of the video data processing method according to any one of the embodiments described above.

BRIEF DESCRIPTION OF DRAWINGS

In order to more clearly explain the technical scheme of the embodiment of the present disclosure, the following drawings will be briefly introduced. Obviously, the drawings described below only relate to some embodiments of the present disclosure, and are not limited to the present disclosure.

Fig. 1 is a schematic structural diagram of a rollable screen according to at least one embodiment of the present disclosure.

Fig. 2 is a block diagram of an exemplary video coding system according to at least one embodiment of the present disclosure;

Fig. 3 is a block diagram of an exemplary video encoder according to at least one embodiment of the present disclosure;

Fig. 4 is a block diagram of an exemplary video decoder according to at least one embodiment of the present disclosure;

Fig. 5 is a schematic diagram of an encoding structure for all-intra configuration according to at least one embodiment of the present disclosure;

Fig. 6 is a schematic diagram of an encoding structure for low-delay configuration according to at least one embodiment of the present disclosure;

Fig. 7A is a schematic diagram of an intra-prediction encoding according to at least one embodiment of the present disclosure;

Fig. 7B is a schematic diagram of another intra-prediction encoding according to at least one embodiment of the present disclosure;

Fig. 7C is a schematic diagram of a multiple reference line intra-prediction according to at least one embodiment of the present disclosure;

Fig. 8 is a schematic diagram of a video data processing method according to at least one embodiment of the present disclosure;

Fig. 9 is a schematic diagram of a video coding for a rollable screen according to at least one embodiment of the present disclosure;

Fig. 10A is a schematic diagram of a rotational axis direction of a rollable screen according to at least one embodiment of the present disclosure;

Fig. 10B is a schematic diagram of a rotational axis direction of another rollable screen according to at least one embodiment of the present disclosure;

Fig. 11 is a schematic diagram of a video data processing method according to at least one embodiment of the present disclosure;

Fig. 12 is a schematic block diagram of a video coding system in an all-intra configuration according to at least one embodiment of the present disclosure;

Fig. 13 is a schematic flow diagram of a video data processing method in an all-intra configuration according to at least one embodiment of the present disclosure;

Fig. 14 is a schematic flow diagram of a video data processing apparatus according to at least one embodiment of the present disclosure;

Fig. 15 is a schematic block diagram of another video data processing apparatus according to at least one embodiment of the present disclosure;

Fig. 16 is a schematic block diagram of yet another video data processing apparatus according to at least one embodiment of the present disclosure; and

Fig. 17 is a schematic block diagram of a non-transitory readable storage medium according to at least one embodiment of the present disclosure.

DETAILED DESCRIPTION

In order to make the purpose, technical scheme and advantages of the embodiment of the present disclosure more clear, the technical scheme of the embodiment of the present disclosure will be described clearly and completely with the attached drawings. Obviously, the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Flowcharts are used in this disclosure to illustrate operations performed by a system according to an embodiment of the present application. It should be understood that the preceding or following operations are not necessarily performed accurately in order. On the contrary, various steps can be processed in reverse order or at the same time, as needed. At the same time, other operations can be added to these processes, or one or more steps can be removed from these processes.

Unless otherwise defined, technical terms or scientific terms used in this disclosure shall have their ordinary meanings as understood by people with ordinary skills in the field to which this disclosure belongs. The terms "first", "second" and the like used in this disclosure do not indicate any order, quantity or importance, but are only used to distinguish different components. Similarly, similar words such as "a", "an" or "the" do not indicate a quantity limit, but indicate the existence of at least one. Similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect. "Up", "Down", "Left" and "Right" are only used to indicate the relative positional relationship. When the absolute position of the described object changes, the relative positional relationship may also change accordingly.

As the demand for high-resolution video increases, video coding methods and techniques are ubiquitous in modern technology. Video codec typically includes electronic circuitry or software that compresses or decompresses digital video and is continually being improved to provide higher encoding efficiency. Video codec converts uncompressed video to compressed format and vice versa. There are complex relationships between video quality, the amount of data used to represent the video (determined by the bit rate), the complexity of the coding algorithms, sensitivity to data loss and errors, ease of editing, random access, end-to-end delay (delay time). Compressed formats typically conform to standard video compression specifications, such as the high-efficiency video coding (HEVC) standard (also known as H. 265), the versatile video coding (VVC) standard to be finalized (also known as H. 266), or other current and/or future video coding standards.

It can be understood that embodiments of the techniques to which the present disclosure relates may be applied to existing video coding standards (e.g. AVC, HEVC, and VVC) and future standards to improve compression performance. Reference may be made herein to existing video coding standards for the description of the coding operation. It can be understood that the methods provided in the present disclosure are not limited to the described video coding standards.

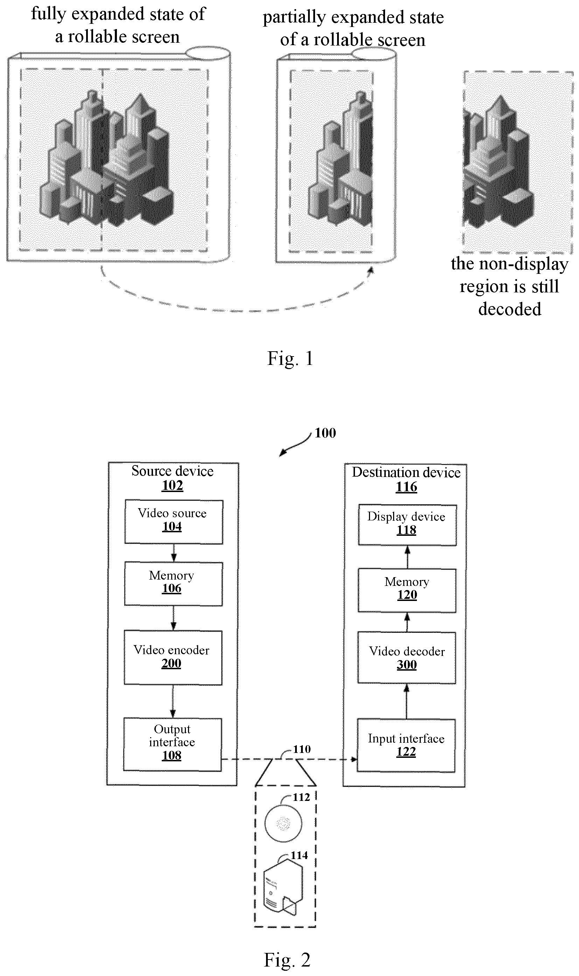

At present, with the emergence of folding screen mobile phone, folding screen-panel and other terminal products, people pay more and more attention to the study of flexible screen, such as a flexible rollable screen. Fig. 1 is a schematic structural diagram of a rollable screen according to at least one embodiment of the present disclosure. As shown in Fig. 1, a rollable screen generally includes a fully deployed state and a partially deployed state. An unrolled portion of the rollable screen is considered a display region and a rolled portion is considered a non-displayed region. It should be noted that in various embodiments of the present disclosure, the rollable screen may be any type of display screen having a variable display region, including but not limited to the rollable screen structure shown in Fig. 1. In general, during actual use of the rollable screen, such as during rolling, a video picture of the rolled portion of the rollable screen does not need to be displayed, but that portion of the picture is still decoded, resulting in a waste of decoding resources.

At least in order to solve the above-mentioned technical problem, at least one embodiment of the present disclosure provides a video data processing method, and the method includes: determining, for a current video block of a video, that a first intra-prediction mode is used for coding, and based on the determining, performing a conversion between the current video block and a bitstream of the video, wherein in the first intra-prediction mode, reference pixels used by the current video block exclude a pixel from an adjacent block on an upper right side of the current video block.

Accordingly, at least one embodiment of the present disclosure also provides a video data processing apparatus, a display apparatus, and a computer-readable storage medium corresponding to the above-mentioned video data processing method.

Through the video data processing method provided by at least one embodiment of the present disclosure, by removing the information dependence on the upper right adjacent block of the current video block, and limiting the intra-prediction mode of the current video block to only use the encoded information of the upper, upper left and left adjacent blocks of the current video block, the bitstream of the video can be partially decoded according to the display area actually displayed, thereby reducing the decoding resource consumption of the non-displayed part, effectively improving the efficiency of video coding, and further improving the use experience of the user on the product.

It should be noted that, in embodiments of the present disclosure, words such as "upper left", "upper right", "upper", "left lower", "left", "right", etc. used to describe the position of adjacent blocks or reference pixels relative to the current video block, have the same meaning as defined in video coding standards (e.g. AVC, HEVC, and VVC). For example, in some examples, "left" and "right" represent two sides in the horizontal direction, " upper " and "below" represent two sides in the vertical direction, "upper left" represents a range of positions rotated 0-90 degrees counterclockwise from a position just above the current position, and "upper right" represents a range of positions rotated 0-90 degrees clockwise from a position just above the current position.

Non-limiting illustrations of layout design methods provided in accordance with the present disclosure are provided below by way of multiple examples or embodiments and instances thereof. As described below, various features of the specific examples or embodiments may be combined with one another without departing from one another to provide new examples or embodiments that are also within the scope of the present disclosure.

At least one embodiment disclosed herein provides a coding system. It will be appreciated that in the present disclosure, the same structured codec can be employed for the encoding end and the decoding end.

Fig. 2 is a block diagram illustrating an exemplary video coding system 1000 that may perform some embodiments in accordance with the present disclosure. The techniques of the present disclosure generally relate to the coding (encoding and/or decoding) of video data. In general, video data includes any data used to process video, and thus, video data may include unencoded original video, encoded video, decoded (e.g. reconstructed) video, and video metadata such as syntax data. The video may include one or more pictures, alternatively referred to as a sequence of pictures.

As shown in Fig. 2, in this example, system 1000 includes a source device 102 for providing encoded video data to be decoded for display by a destination device 116, the encoded video data is used to form a bitstream for transmission to a decoding end, where the bitstream may also be referred to as a bit stream. In particular, source device 102 provides encoded video data to the destination device 116 via a computer-readable medium 110. The source device 102 and the destination device 116 may be implemented as a variety of devices, such as a desktop computer, a notebook (i.e. portable) computer, a tablet computer, a mobile device, a set-top box, a smartphone, a handheld telephone, a television, a camera, a display device, a digital media player, a video game player, a video streaming device, etc. In some cases, the source device 102 and the destination device 116 may be equipped for wireless communication, thus may also be referred to as wireless communication devices.

In the example of Fig. 2, the source device 102 includes a video source 104, a memory 106, a video encoder 200, and an output interface 108. The destination device 116 includes an input interface 122, a video decoder 300, a memory 120, and a display device 118. According to some embodiments of the present disclosure, the video encoder 200 of the source device 102 and the video decoder 300 of the destination device 116 may be configured to implement encoding methods and decoding methods according to some embodiments of the present disclosure. Thus, the source device 102 represents an example of a video encoding device and the destination device 116 represents an example of a video decoding device. In other examples, the source device 102 and the destination device 116 may include other assemblies or configurations. For example, the source device 102 may receive video data from an external video source, such as an external camera. Also, the destination device 116 may be connected to an external display device without the need for a built-in integrated display device 118.

The system 1000 shown in Fig. 2 is only one example. In general, any digital video encoding and/or decoding device may perform an encoding method and a decoding method according to some embodiments of the present disclosure. The source device 102 and the destination device 116 are merely examples of such codec devices in which the source device 102 generates a bitstream for transmission to the destination device 116. The present disclosure refers to a "coding" (encoding and/or decoding) device as a device that performs data encoding and/or data decoding). Accordingly, the video encoder 200 and the video decoder 300 respectively represent examples of coding devices.

In some examples, the devices 102, 116 operate in a substantially symmetrical manner such that both devices 102, 116 include video coding assemblies, i.e. both devices 102, 116 may implement video coding processes. Thus, the system 1000 can support unidirectional or bidirectional video transmission between video devices 102 and 116, such as may be used for video streaming, video playback, video broadcasting, or video telephony communications.

In general, the video source 104 represents a source of video data (i.e. raw video data that has not been encoded) and provides a continuous series of pictures (also referred to as "frames") of video data to the video encoder 200, which encodes the data of the pictures. The video source 104 of the source device 102 may include a video capture device, such as a video camera, a video archive containing previously captured raw video, and/or a video feed interface for receiving video from a video content provider. As another alternative, the video source 104 may generate computer graphics-based data as source video or a combination of live video, archived video, and computer-generated video. In various cases, the video encoder 200 encodes captured, pre-captured, or computer-generated video data. The video encoder 200 may rearrange pictures from an order as they are received (sometimes referred to as a "display order") into an encoding order for encoding. The video encoder 200 may generate a bitstream that includes encoded video data. The source device 102 may then output the generated bitstream via the output interface 108 to the computer-readable medium 110 for receipt and/or search by, for example, the input interface 122 of the destination device 116.

The memory 106 of the source device 102 and the memory 120 of the destination device 116 represent a general-purpose memory. In some examples, the memory 106 and the memory 120 may store original video data, such as original video data from the video source 104 and decoded video data from the video decoder 300. Additionally or alternatively, the memory 106 and the memory 120 may respectively store software instructions that may be executed by the video encoder 200 and the video decoder 300, respectively. Although shown separately from the video encoder 200 and the video decoder 300 in this example, it should be understood that the video encoder 200 and the video decoder 300 may also include internal memory for functionally similar or equivalent purposes. Further, the memory 106 and the memory 120 may store encoded video data output from the video encoder 200 and input same to the video decoder 300, etc. In some examples, portions of the memory 106 and the memory 120 may be allocated as one or more video buffers, such as to store decoded and/or encoded original video data.

The computer-readable medium 110 may represent any type of medium or device capable of transmitting encoded video data from the source device 102 to the destination device 116. In some examples, the computer-readable medium 110 represents a communication medium to enable the source device 102 to transmit the bitstream directly in real-time to the destination device 116 via a radio frequency network, a computer network, or the like. The output interface 108 may modulate a transmission signal including the encoded video data and the input interface 122 may modulate a received transmission signal in accordance with a communication standard such as a wireless communication protocol. The communication medium may include a wireless or wired communication medium, or both, for example, a radio frequency (RF) spectrum or one or more physical transmission lines. The communication medium may form part of a packet-based network, such as a local area network, a wide area network, or a global network such as the Internet. The communication medium may include a router, a switch, a base station, or any other device operable to facilitate communication from the source device 102 to the destination device 116.

In some examples, the source device 102 may output encoded data from the output interface 108 to a storage device 112. Similarly, the destination device 116 may access the encoded data from the storage device 112 via the input interface 122. The storage device 112 may include various distributed or locally accessed data storage media, such as a hard disk drive, a Blue-ray disc, a digital video disc (DVD), a compact disc read-only memory (CD-ROM), a flash memory, a volatile, or a non-volatile memory, or any other suitable digital storage medium for storing the encoded video data.

In some examples, the source device 102 may output the encoded data to a file server 114 or another intermediate storage device that may store the encoded video generated by the source device 102. The destination device 116 may access the stored video data from the file server 114 via an on-line or download mode. The file server 114 may be any type of server device capable of storing the encoded data and transmitting the encoded data to the destination device 116. The file server 114 may represent a network server (e.g. for a website), a file transfer protocol (FTP) server, a content distribution network device, or a network-attached storage (NAS) device. The destination device 116 may access the encoded data from the file server 114 over any standard data connection, including an Internet connection. This may include a wireless channel such as a Wi-Fi connection, a wired connection such as a digital subscriber line (DSL) and a cable modem, or a combination of a wireless channel and a wired connection suitable for accessing encoded video data stored on the file server 114. The file server 114 and the input interface 122 may be configured to operate according to a streaming protocol, a download transport protocol, or a combination thereof.

The output interface 108 and the input interface 122 may represent wired networking assemblies such as wireless transmitters/receivers, modems, ethernet cards, wireless communication assemblies operating in accordance with any of the various IEEE 802.11 standards, or other physical assemblies. In examples where the output interface 108 and the input interface 122 include wireless assemblies, the output interface 108 and the input interface 122 may be configured to communicate data, such as encoded data, in accordance with a fourth-generation mobile communication technology (4G), a 4G long term evolution (4G-LTE), an advanced LTE (LTE Advanced), a fifth generation mobile communication technology (5G), or other cellular communication standards. In some examples where output interface 108 includes a wireless transmitter, the output interface 108 and the input interface 122 may be configured to communicate data, such as encoded data, in accordance with other wireless standards, such as the IEEE 802.11 specification, the IEEE 802.15 specification (e.g. ZigBee™), the Bluetooth standard, etc. In some examples, the source device 102 and/or the destination device 116 may include corresponding system-on-chip (SoC) devices. For example, the source device 102 may include an SoC device to perform functions of the video encoder 200 and/or the output interface 108, and the destination device 116 may include an SoC device to perform functions such as the video decoder 300 and/or the input interface 122.

The disclosed techniques may be applied to support video encoding to a variety of multimedia applications, such as wireless television broadcast, cable television transmission, satellite television transmission, Internet streaming video transmission such as HTTP-based dynamic adaptive streaming, digital video encoded onto a data storage medium, decoding of digital video stored on a data storage medium, or other applications.

The input interface 122 of the destination device 116 receives the bitstream from the computer-readable medium 110, such as the storage device 112 and the file server 114. The bitstream may include signaling information defined by the video encoder 200 that is also used by the video decoder 300, such as syntax elements having values describing the nature and/or processing of video blocks or other coding units (e.g. slices, pictures, groups of pictures, sequences, etc.).

The display device 118 displays a decoded picture of the decoded video data to a user. The display device 118 may be various types of display devices, such as a cathode-ray tube(CRT)-based device, a liquid crystal display (LCD), a plasma display, an organic light emitting diode (OLED) display, or other types of display devices, etc.

Although not shown in Fig. 2, in some examples, the video encoder 200 and the video decoder 300 may each be integrated with an audio encoder and/or audio decoder, and may include appropriate multiplex and de-multiplex (MUX-DEMUX) units or other hardware and/or software to handle multiplexed streams including both audio and video in a common data stream. If applicable, the MUX-DEMUX unit may conform to the ITU H. 223 multiplexer protocol or other protocols such as the user datagram protocol (UDP).

Both the video encoder 200 and the video decoder 300 may be implemented as any suitable codec circuit, such as a microprocessor, a digital signal processor (DSP), an application-specific integrated circuit (ASIC), a field programmable gate array (FPGA), discrete logic elements, a software, a hardware, a firmware, or any combination thereof. When the techniques are implemented in part in software, the device may store instructions for the software in a suitable non-transitory computer-readable medium and execute the instructions in hardware using one or more of the above processors to perform the techniques of the disclosure. Both the video encoder 200 and the video decoder 300 may be included in one or more encoders or decoders, either of which may be integrated as part of a combined encoder/decoder (CODEC) in a corresponding device. The device, including video encoder 200 and/or video decoder 300, may be an integrated circuit, a microprocessor, and/or a wireless communication device such as a cellular telephone.

The video encoder 200 and video decoder 300 may be operated according to a video coding standard, e.g., a video coding standard such as ITU-T H. 265 (also known as HEVC), or an extension of HEVC such as multi-view and/or scalable video coding extensions. Alternatively, the video encoder 200 and the video decoder 300 may be operated according to other proprietary or industry standards, such as the joint exploratory test model (JEM) or the versatile video codec (VVC) standards currently being developed. The techniques referred to in the present disclosure are not limited to any particular codec standard.

In general, the video encoder 200 and the video decoder 300 may encode and decode video data represented in a YUV (e.g., Y, Cb, Cr) format. That is, the video encoder 200 and the video decoder 300 may code luma components and chroma components instead of coding red, green, and blue (RGB) data of a picture sample, where the chroma components may include chroma components of a red tone and a blue tone. In some examples, the video encoder 200 converts the received RGB formatted data to a YUV format prior to encoding, and video decoder 300 converts the YUV format to an RGB format. Optionally, a pre-processing unit and a post-processing unit (not shown) may perform these conversions.

In general, the video encoder 200 and the video decoder 300 may perform a block-based codec process for pictures. The term "block" generally refers to a structure that includes data to be processed (e.g., encoded, decoded otherwise used in the encoding and/or decoding process). For example, the block may include a two-dimensional matrix of luma and/or chroma data samples. In general, a picture may first be partitioned into a plurality of blocks for coding (encoding and/or decoding) processing, and the block undergoing coding processing in the picture may be referred to as a

"current block" 或 or a "current video block".

In addition, embodiments of the present disclosure may also relate to coding pictures to include processes for encoding or decoding picture data. Similarly, the present disclosure may relate to encoding a block of a picture to include a process of encoding or decoding data of the block, such as prediction and/or residual encoding. The bitstream resulting from the encoding process typically includes a series of values for syntax elements representing the encoding decision (e.g., encoding mode) and the information to partition the picture into blocks. Thus, encoding a picture or block can generally be understood as encoding the values of the syntax elements that form the picture or block.

HEVC defines various blocks, including a coding unit (CU), a prediction unit (PU), and a transform unit (TU). According to the HEVC, a video encoder, such as the video encoder 200, partitions a coding tree unit CTU into CUs according to a quadtree structure. That is, the video encoder partitions the CTU and the CU into four equal non-overlapping blocks, and each node of the quadtree has zero or four sub-nodes. Nodes without sub-nodes may be referred to as "leaf nodes", and CUs of such leaf nodes may include one or more PUs and/or one or more TUs. The video encoder may further partition the PU and the TU. For example, in the HEVC, the residual quadtree RQT represents the partitioning of the TU. In the HEVC, PU represents inter-prediction data, and TU represents residual data. The intra-predicted CU includes intra-prediction information such as an intra mode indication.

In VVC, a quadtree with nested multi-type trees (using binary and ternary tree partitioning) replaces the concept of multiple partition unit types, i.e. it removes the separation of the CU, PU, and TU concepts, unless oversized CUs are needed for maximum transform length, and supports greater flexibility of CU partition shapes. In the encoding tree structure, the CUs may have a square or rectangular shape. First, the CTU is partitioned by a quadtree structure. The quadtree leaf nodes may then be further partitioned by a multi-type tree structure. The multi-type leaf nodes are called coding units CU, and unless the CU is too large for the maximum transform length, the partition is used for prediction and transform processing without any further partitioning. This means that in most cases, the CUs, Pus, and TUs have the same block size in a quadtree with a nested multi-type tree encoding block structure.

The video encoder 200 and the video decoder 300 may be configured to use quadtree partitioning according to HEVC, the quadtree binary tree (QTBT) partitioning, or other partitioning structures are used according to JEM. It should be appreciated that the disclosed techniques may also be applied to video encoders configured to use quadtree partitioning or other partitioning types. The video encoder 200 encodes video data for CUs representing the prediction information and/or the residual information and other information. The prediction information indicates how to predict the CU to form a prediction block for the CU. The residual information generally represents a sample-by-sample difference between the sample of the CU before encoding and the prediction block sample.

The video encoder 200 may further generate, e.g. in a picture header, a block header, a slice header etc., syntax data for the video decoder 300 such as block-based syntax data, picture-based syntax data, and sequence-based syntax data, or generate other syntax data such as a sequence parameter set (SPS), a picture parameter set (PPS), or a video parameter set (VPS). The video decoder 300 may likewise decode such syntax data to determine how to decode the corresponding video data. For example, the syntax data may include various syntax elements, flags, parameters, etc., for representing the coding information of the video.

In this manner, the video encoder 200 may generate a bitstream that includes encoded video data, such as prediction information and/or residual information describing syntax elements and blocks that partition a picture into blocks, such as CUs. Finally, the video decoder 300 may receive the bitstream and decode the encoded video data.

In general, the video decoder 300 performs a process that is reciprocal to the process performed by the video encoder 200 to decode the encoded video data in the bitstream. For example, the video decoder 300 may decode the values of the syntax elements of the bitstream in a manner substantially similar to the video encoder 200. The syntax element may define a picture CTU according to the partitioning information, and partition each CTU according to a corresponding partitioning structure, such as a QTBT structure, to define a CU of the CTU. The syntax element may further define the prediction information and the residual information for a block of video data, such as a CU. The residual information may be represented by, for example, quantized transform coefficients. The video decoder 300 may inverse quantize and inverse transform the quantized transform coefficients of the block to reproduce the residual block of the block. The video decoder 300 uses a prediction mode (intra-prediction or inter-prediction) signaled in the bitstream and associated prediction information (e.g., motion information for inter-prediction) to form a prediction block of blocks. The video decoder 300 may then combine the prediction block and the residual block (on a sample-by-sample basis) to reproduce the original block. In addition, the video decoder 300 may also perform additional processing, such as performing a deblocking process to reduce visual artifacts along block borders.

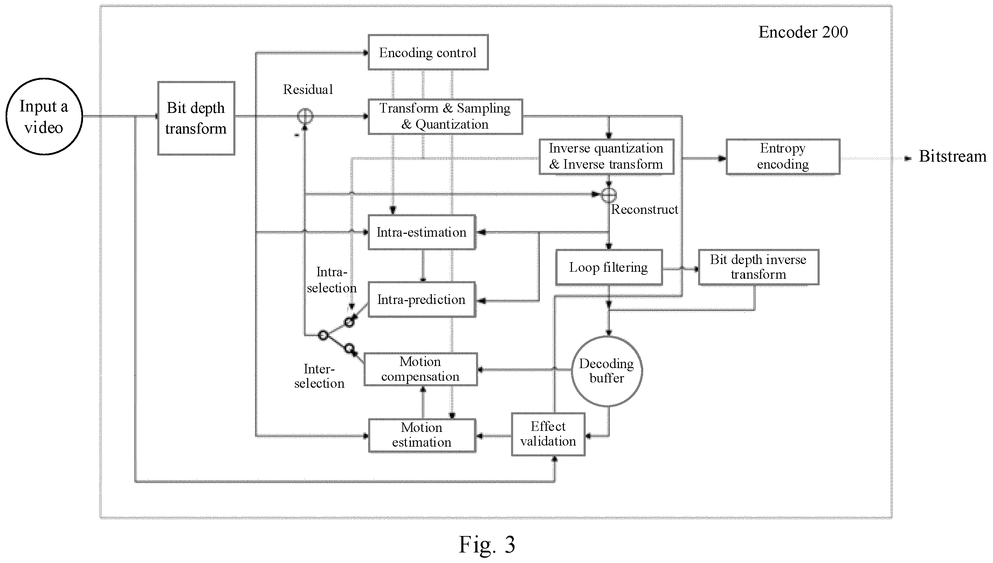

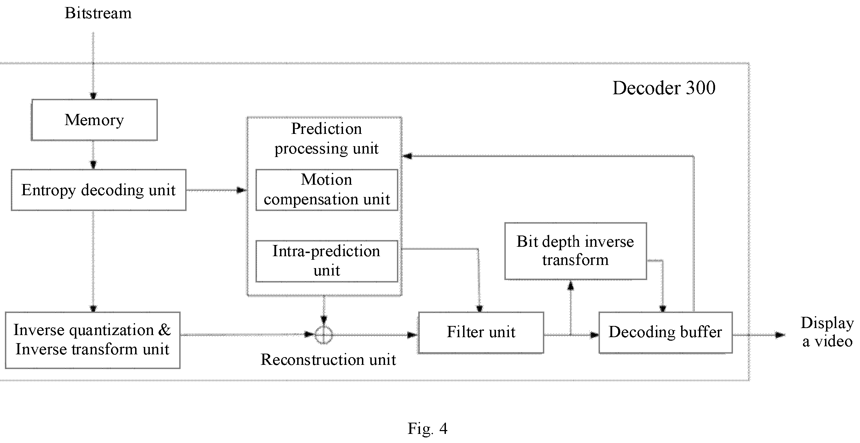

Fig. 3 is a block diagram illustrating an exemplary video encoder according to some embodiments of the present disclosure, and correspondingly, Fig. 4 is a block diagram illustrating an exemplary video decoder according to some embodiments of the present disclosure. For example, the encoder illustrated in Fig. 3 may be implemented as the video encoder 200 in Fig. 2 and the decoder illustrated in Fig. 4 may be implemented as the video decoder 300 in Fig. 2. The following will provide a detailed description of the codec according to some embodiments of the present disclosure, in conjunction with Fig. 3 and Fig. 4.

It is to be understood that Fig. 3 and Fig. 4 are provided for purposes of explanation and should not be construed as limiting the techniques broadly illustrated and described in the present disclosure. For purposes of explanation, the present disclosure describes the video encoder 200 and the video decoder 300 in the context of a developing video coding standard, such as the HEVC video coding standard or the H. 266 video coding standard, although the techniques of the present disclosure are not limited to these video coding standards.

The units (or modules) in Fig. 3 are shown to aid in understanding the operations performed by the video encoder 200. These units may be implemented as fixed-function circuits, programmable circuits, or a combination of both. The fixed-function circuit refers to a circuit that provides a specific function and is previously provided for an executable operation. Programmable circuitry refers to circuitry that can be programmed to perform a variety of tasks and provide flexible functionality in executable operations. For example, a programmable circuit may execute software or firmware that causes the programmable circuit to operate in a manner defined by instructions of the software or firmware. Fixed function circuits may execute software instructions (to receive parameters or output parameters, etc.), but the type of operation performed by fixed function circuits is typically fixed. In some examples, one or more of the units may be different circuit blocks (fixed function circuit blocks or programmable circuit blocks), and in some examples, one or more of the units may be integrated circuits.

The video encoder 200 shown in Fig. 3 may include an arithmetic logic unit (ALU), a basic function unit (EFU), a digital circuit, an analog circuit, and/or a programmable core formed of programmable circuits. In examples where the operation of the video encoder 200 is performed using software executed by programmable circuitry, the memory 106 (Fig. 2) may store object code for the software received and executed by video encoder 200, or other memory (not shown in the figures) within video encoder 200 for storing such instructions.

In the example of Fig. 3, video encoder 200 may receive the input video, for example, from a video data memory, for example, or may receive input video directly from a video capture device. The video data memory may store video data to be encoded by the assembly of the video encoder 200. The video encoder 200 may receive the video data stored in a video data memory from a source such as the video source 104 (shown in Fig. 2). The decoding buffer may be used as a reference picture memory to store reference video data for use by video encoder 200 in predicting subsequent video data. The video data memory and decoding buffer may be formed by a variety of memory devices, such as dynamic random access memory (DRAM) including synchronous DRAM (SDRAM), magnetoresistive RAM (MRAM), resistive RAM (RRAM), or other types of memory devices. The video data memory and the decoding buffer may be provided by the same storage device or by different storage devices. In various examples, the video data memory may or may not be on the same chip as other assemblies of the video encoder 200 as shown in Fig. 3.

In the present disclosure, references to video data memory should not be construed as limited to the memory internal to the video encoder 200 (unless specifically described as such) or to memory external to the video encoder 200 (unless specifically described as such). More specifically, reference to the video data memory is understood to be a reference memory that stores video data received by the video encoder 200 for encoding, such as video data of the current block to be encoded. In addition, the memory 106 in Fig. 2 may also provide temporary storage for the output of the units in the video encoder 200.

The mode selection unit typically coordinates multiple encoding channels to test combinations of encoding parameters and the rate-distortion values resulting from these combinations. The encoding parameters may include the partitioning of the CTU into CUs, the prediction mode of the CUs, the type of transform of the residual data of the CUs, the quantization parameters of the residual data of the CUs, etc. The mode selection unit may finally select a combination of encoding parameters having a better rate-distortion value than the other tested combinations.

The video encoder 200 may partition a picture searched from the video memory into a series of CTUs and encapsulate one or more CTUs into a slice. The mode selection unit may partition the CTU of the picture according to a tree structure, such as the QTBT structure or the quadtree structure of HEVC described above. As described above, the video encoder 200 may form one or more CUs by partitioning the CTU according to the tree structure. Such CUs may also be commonly referred to as "blocks" or "video blocks".

In general, the mode selection unit also controls its assemblies, such as a motion estimation unit, a motion compensation unit, and an intra-prediction unit, to generate a prediction block of a current block, such as an overlapping portion of a PU and a TU in a current CU or HEVC. For inter-prediction of the current block, the motion estimation unit may perform a motion search to identify one or more closely matching reference blocks in one or more reference pictures, such as one or more decoded pictures stored in the decoding buffer. In particular, the motion estimation unit may calculate a value representing how similar a potential reference block is to the current block, e.g., from a sum of absolute differences (SAD), a sum of squared differences (SSD), an average absolute difference (MAD), an average squared difference (MSD), etc., and the motion estimation unit may typically be performed using the sample-by-sample difference between the current block and the considered reference block. The motion estimation unit may identify the reference block having the lowest value resulting from these calculations, thereby indicating the reference block that most closely matches the current block.

The motion estimation unit may form one or more motion vectors (MVs) that define the position of the reference block in the reference picture relative to the position of the current block in the current picture. The motion estimation unit may then provide the motion vectors to the motion compensation unit. For example, for unidirectional inter-prediction, the motion estimation unit may provide a single motion vector, while for bidirectional inter-prediction, the motion estimation unit may provide two motion vectors. The motion compensation unit may then generate a prediction block using the motion vector. For example, the motion compensation unit may use the motion vectors to search the data of the reference block. As another example, if the motion vector has fractional sample precision, the motion compensation unit may interpolate the prediction block according to one or more interpolation filters. Further, for bidirectional inter-prediction, the motion compensation unit may search data of two reference blocks identified by corresponding motion vectors, and combine the searched data by a sample-by-sample average or a weighted average, etc.

As another example, for intra-prediction, the intra-prediction unit may generate a prediction block from samples adjacent to the current block. For example, for a directional mode, the intra-prediction unit may typically mathematically combine the values of adjacent samples and populate these calculated values along a defined direction on the current block to generate a prediction block. As another example, for a DC mode, the intra-prediction unit may calculate an average value of samples adjacent to the current block and generate the prediction block to include the resulting average value of each sample of the prediction block.

For other video coding techniques, such as intra block copy mode encoding, affine mode encoding, and linear model (LM) mode encoding, for example, the mode selection unit may generate a prediction block for the current block being encoded via a corresponding unit associated with the codec technique. In some examples, such as palette mode encoding, the mode selection unit may not generate the prediction block, but a syntax element indicating a manner in which the block is reconstructed from the selected palette. In such a mode, the mode selection unit may provide these syntax elements to the entropy encoding unit for encoding.

As described above, the residual unit receives the current block and the corresponding prediction block. The residual unit then generates a residual block of the current block. To generate the residual block, the residual unit calculates a sample-by-sample difference between the prediction block and the current block.

The transform unit ("transform & sampling & quantization" shown in Fig. 3) applies one or more transforms to the residual block to generate a transform coefficient block (e.g., referred to as a" transform coefficient block "). The transform unit may apply various transforms to the residual block to form a transform coefficient block. For example, the transform unit may apply a discrete cosine transform (DCT), a directional transform, a KLT transform, or a conceptually similar transform to the residual block. In some examples, the transform unit may perform multiple transforms on the residual block, e.g., a primary transform and a secondary transform, such as a rotational transform. In some examples, the transform unit may not apply the transform to the residual block.

The transform unit may then quantize the transform coefficients in the transform coefficient block to produce a quantized transform coefficient block. The transform unit may quantize the transform coefficients of the transform coefficient block according to a quantization parameter (QP) value associated with the current block. The video encoder 200 (e.g., via a mode selection unit) may adjust the degree of quantization applied to the coefficient block associated with the current block by adjusting the QP value associated with the CU. The quantization may result in the loss of information, so the quantized transform coefficients may be less accurate than the original transform coefficients.

In addition, the encoder 200 may further include an encoding control unit for generating control information for operations in the encoding process. Next, an inverse quantization and inverse transform unit ( "inverse quantization & inverse transform" shown in Fig. 3) may apply the inverse quantization and inverse transform, respectively, to the quantized transform coefficient block to obtain a reconstructed residue block from the transform coefficient block. The reconstruction unit may generate a reconstructed block corresponding to the current block based on the reconstructed residual block and the prediction block generated by the mode selection unit (although there may be some degree of distortion). For example, the reconstruction unit may add samples of the reconstructed residual block to corresponding samples from the prediction block generated by the mode selection unit to generate the reconstructed block.

The reconstructed block may be subjected to a filtering process, such as the loop filtering unit shown in Fig. 3, to perform one or more filtering operations. For example, the filtering process may include a deblocking operation to reduce blocking artifacts along CU edges. In some examples, the operation of the filtering process may be skipped.

The video encoder 200 may then store the reconstructed block in the decoding buffer after, for example, loop filtering. In an example of skipping the filtering process, the reconstruction unit may store the reconstructed block in the decoding buffer. In an example where filtering is required, the filtered reconstructed block may be stored in the decoding buffer. The motion estimation unit and the motion compensation unit may search the reference picture formed by the reconstructed (and possibly filtered) block from the decoding buffer to perform inter-prediction encoding on the block of the subsequently encoded picture. Further, the intra-prediction unit may perform intra-prediction on other blocks in the current picture using the reconstructed blocks in the decoding buffer of the current picture.

The operations described above are with respect to blocks. This description should be understood as an operation for luma encoding blocks and/or chroma encoding blocks. As described above, in some examples, the luma coding blocks and chroma coding blocks are the luma components and chroma components of the CU. In some examples, the luma coding block and chroma coding blocks are the luma and chroma components of the PU.

In general, the entropy encoding unit may entropy encode syntax elements received from other functional assemblies of the video encoder 200. For example, the entropy encoding unit may entropy encode the quantized transform coefficient block from the transform unit. For example, the entropy encoding unit may entropy encode a prediction syntax element from the mode selection unit, such as motion information of inter-prediction or intra mode information of intra-prediction, to generate entropy-encoded data. For example, the entropy encoding unit may perform a context adaptive variable length encoding (CAVLC) operation, a context adaptive binary arithmetic encoding (CABAC) operation, a variable-length encoding operation, a syntax-based context adaptive binary arithmetic encoding (SBAC) operation, a probability interval partition entropy (PIPE) encoding operation, an exponential Columbus encoding operation, or other types of entropy encoding operation on the data. In some examples, the entropy encoding unit may operate in a bypass mode where syntax elements are not entropy encoded. The video encoder 200 may output a bitstream that includes entropy encoding syntax elements needed to reconstruct a slice or a block of a picture.

Fig. 4 is a block diagram illustrating an exemplary video decoder according to some embodiments of the present disclosure. For example, the decoder illustrated in Fig. 4 may be the video decoder 300 in Fig. 2. It is to be understood that Fig. 4 is provided for purposes of explanation and not limitation of the techniques broadly illustrated and described in the present disclosure. For purposes of explanation, the video decoder 300 is described in terms of the HEVC technique. However, the disclosed techniques may be performed by a video decoding device configured with other video coding standards.

It can be appreciated that in practice the basic structure of the video decoder 300 may be similar to the video encoder shown in Fig. 3, such that both the encoder 200 and the decoder 300 include video coding assemblies, i.e., both the encoder 200 and the decoder 300 may implement video coding processes. In this case, the encoder 200 and the decoder 300 may be collectively referred to as a codec. Thus, a system comprised of the encoder 200 and the decoder 300 may support unidirectional or bidirectional video transmission between devices, such as may be used for video streaming, video playback, video broadcasting, or video telephony communications. It may be appreciated that the video decoder 300 may include more, fewer, or different functional assemblies than those shown in Fig. 4. For purposes of explanation, assemblies associated with a decoding conversion process according to some embodiments of the present disclosure are shown in Fig. 4.

In the example of Fig. 4, the video decoder 300 includes a memory, an entropy decoding unit, a prediction processing unit, an inverse quantization and inverse transform unit ("inverse quantization & inverse transform unit" shown in Fig. 4), a reconstruction unit, a filter unit, a decoding buffer, and a bit depth inverse transform unit. Here, the prediction processing unit may include a motion compensation unit and an intra-prediction unit. The prediction processing unit may, for example, further include an addition unit to perform prediction according to other prediction modes. By way of example, the prediction processing unit may include a palette unit, an intra block copy unit (which may form a part of the motion compensation unit), an affine unit, a linear model (LM) unit, etc. In other examples, the video decoder 300 may include more, fewer, or different functional assemblies.

As shown in Fig. 4, first, the decoder 300 may receive a bitstream including encoded video data. For example, the memory in Fig. 4 may be referred to as a coding picture buffer (CPB) to store a bitstream including the encoded video data that is configured for waiting to be decoded by assemblies of the video decoder 300. The video data stored in the CPB may be obtained, for example, from the computer-readable medium 110 (Fig. 1) or the like. In addition, the CPB may also store temporary data such as the output of various units of the video decoder 300. The decoding buffer typically stores decoded pictures that the video decoder 300 can output and/or use as reference video data when subsequent data or pictures of the bitstream are decoded. The CPB memory and decoding buffer may be formed of a variety of memory devices, such as dynamic random access memory (DRAM), including synchronous DRAM (SDRAM), magneto resistive RAM (MRAM), resistive RAM (RRAM), or other types of memory devices. The CPB memory and the decoding buffer may be provided by the same storage device or by different storage devices. In various examples, the CPB memory may or may not be on the same chip as other assemblies of the video decoder 300, as shown.

The various units shown in Fig. 4 are shown to aid in understanding the operations performed by the video decoder 300. These units may be implemented as fixed-function circuits, programmable circuits, or a combination of both. Like Fig. 3, the fixed-function circuit refers to a circuit that provides a specific function and is previously provided on an executable operation. Programmable circuitry refers to circuitry that can be programmed to perform a variety of tasks and provide flexible functionality in executable operations. For example, a programmable circuit may execute software or firmware that causes the programmable circuit to operate in a manner defined by instructions of the software or firmware. Fixed function circuits may execute software instructions (to receive parameters or output parameters, etc.), but the type of operation performed by fixed function circuits is typically fixed. In some examples, one or more of the units may be different circuit blocks (fixed function circuit blocks or programmable circuit blocks), and in some examples, one or more of the units may be integrated circuits.

The video decoder 300 may include an ALU, an EFU, a digital circuit, an analog circuit, and/or a programmable core formed of programmable circuits. In an example where the operation of the video decoder 300 is performed by a software-executed on programmable circuitry, an on-chip or off-chip memory may store instructions (e.g. object code) for the software received and executed by video decoder 300.

The entropy decoding unit may then entropy-decode the received bitstream to parse therefrom the encoding information corresponding to the picture.

Then, the decoder 300 may perform decoding conversion processing for generating display video data according to the parsed encoding information. According to some embodiments of the present disclosure, operations executable by decoder 300 at the decoding end may refer to a decoding conversion process as shown in Fig. 4, which may be understood to include a general decoding process to generate a display picture for display by a display device.

In the decoder 300 shown in Fig. 4, the entropy decoding unit may receive a bitstream including encoded video from, for example, the memory 120 and entropy-decode same to reproduce syntax elements. The inverse quantization and inverse transform unit ("inverse quantization & inverse transform" shown in Fig. 4), the reconstruction unit, and the filter unit may generate decoded video based on syntax elements extracted from the bitstream, e.g., generate decoded pictures.

In general, the video decoder 300 reconstructs pictures on a block-by-block basis. The video decoder 400 may perform the reconstruction operation separately for each block, where the block currently being reconstructed (i.e. decoded) may be referred to as the "current block".

In particular, the entropy decoding unit may entropy-decode the syntax elements of the quantized transform coefficients of the quantized transform coefficient block and the transform information such as a quantization parameter (QP) and/or a transform mode indication. The inverse quantization and inverse transform unit may use the QP associated with the quantized transform coefficient block to determine a degree of the quantization, and likewise may determine the degree of inverse quantization to apply. For example, the inverse quantization and inverse transform unit may perform a bitwise left shift operation to inverse quantize the quantized transform coefficients. The inverse quantization and inverse transform unit may thus form a transform coefficient block including transform coefficients. After forming the transform coefficient block, the inverse quantization and inverse transform unit may apply one or more inverse transforms to the transform coefficient block to generate a residual block associated with the current block. For example, the inverse quantization and inverse transform unit may apply an inverse DCT, inverse integer transform, inverse KLT, inverse rotation transform, inverse direction transform, or other inverse transform to the coefficient block.

Further, the prediction processing unit generates a prediction block based on the prediction information syntax element, entropy-decoded by the entropy decoding unit. For example, if the prediction information syntax element indicates that the current block is inter-predicted, the motion compensation unit may generate a prediction block. In this case, the prediction information syntax element may indicate a reference picture in the decoding buffer from which the reference block is searched, and indicate a motion vector identifying the position of the reference block in the reference picture relative to the current block in the current picture. The motion compensation unit may generally perform the inter-prediction process in a manner substantially similar to that described with respect to the motion compensation unit in Fig. 3.

As another example, if the prediction information syntax elements indicate intra-prediction on the current block, the intra-prediction unit may generate the prediction block according to the intra-prediction mode indicated by the prediction information syntax elements. Also, the intra-prediction unit may generally perform the intra-prediction process in a manner substantially similar to that described with respect to the intra-prediction unit in Fig. 3. The intra-prediction unit may search data of neighboring samples of the current block from the decoding buffer.

The reconstruction unit may reconstruct the current block using the prediction block and the residual block. For example, the reconstruction unit may add samples of the residual block to corresponding samples of the prediction block to reconstruct the current block.

The filter unit may then perform one or more filter operations on the reconstructed block. For example, the filter unit may perform a deblocking operation to reduce blocking artifacts along an edge of the reconstructed block. It will be appreciated that the filtering operation does not need to be performed in all examples, i.e. the filtering operation may be skipped in some cases.

The video decoder 300 may store the reconstructed blocks in the decoding buffer. As described above, the decoding buffer may provide reference information, such as samples of a current picture for intra-prediction and samples of a previously decoded picture for subsequent motion compensation, to a motion compensation, motion estimation unit. Further, the video decoder 300 may output decoded pictures from the decoding buffer for subsequent presentation on a display device, such as the display device 118 of Fig. 2.

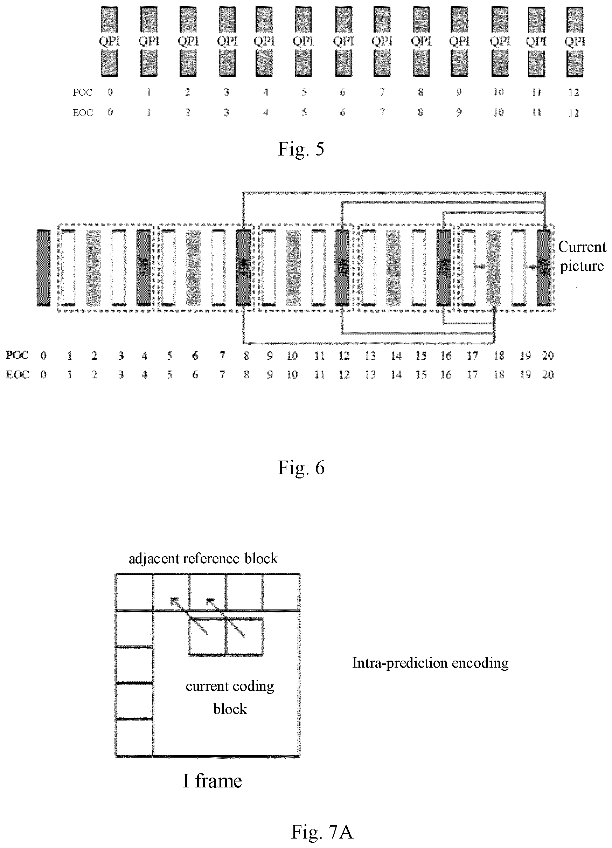

Fig. 5 is a schematic diagram of an encoding structure for all-intra (AI) configuration according to at least one embodiment of the present disclosure.

For example, as shown in Fig. 5, in an all-intra (AI) configuration, all frames in the video are encoded as I-frames during the encoding process, i.e. the coding process is completely independent, and there is no dependency on other frames. At the same time, the quantization parameter (QP) of the encoding process does not fluctuate with the encoding position and is equal to a QP value (QPI) of a first frame. As shown in Fig. 5, in the all-intra (AI) configuration, a playing order and an encoding order of all frames in the video are the same, i.e., the playing order count (POC) and the encoding order count (EOC) of the video frames are the same.

Fig. 6 is a schematic diagram of an encoding structure for low delay (LD) configuration according to at least one embodiment of the present disclosure.

Generally, in practical applications, low-delay (LD) configurations are primarily suitable for real-time communication environments with low-delay requirements. As shown in Fig. 6, in the LD configuration, generalized P/B frame prediction is used for all P frames or B frames, and the EOC of all frames is still consistent with POC. A "1+x" scheme is proposed for low delay configurations, where "1" is the nearest neighboring reference frame and "x" represents x reference frames with high quality.

Fig. 7A is a schematic diagram of an intra-prediction encoding according to at least one embodiment of the present disclosure.

The main idea of video prediction encoding is to eliminate inter-pixel correlation by prediction. According to different reference pixel positions, video prediction encoding techniques are mainly divided into two categories: (1) intra-prediction, where an encoded pixel in a current picture (a current video frame) is used to generate a predicted value; (2) inter-prediction, where the predicted value is generated using reconstructed pixels of a previously encoded picture of the current picture (the current video frame). Intra-prediction encoding refers to using a correlation in a video spatial domain to predict a current pixel using an encoded pixel in a current image so as to remove redundancy in the video spatial domain. As shown in Fig. 7A, a current coding block may perform intra-prediction using encoded information of adjacent reference block within the current video frame (e.g., an I-frame) to generate prediction information (or prediction block) for the current coding block.

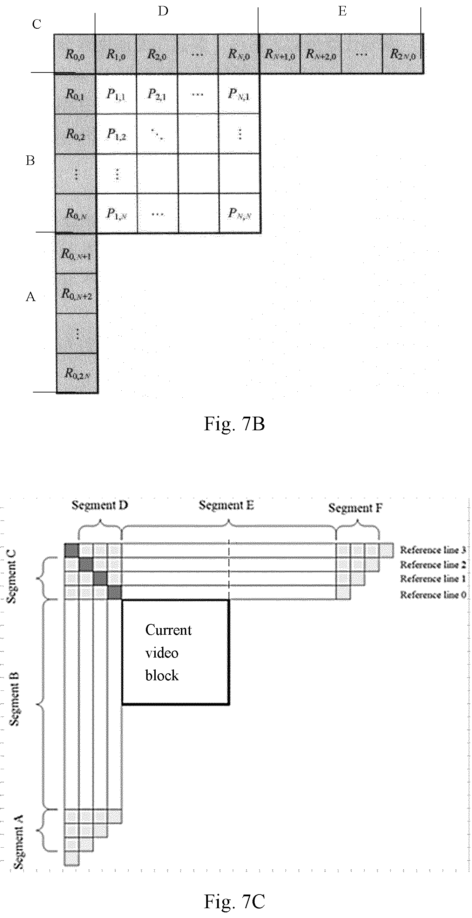

Fig. 7B is a schematic diagram of an intra-prediction encoding according to at least one embodiment of the present disclosure.

For example, in the video coding standard HEVC, I-frame pictures can only be compression-coded using intra encoding techniques. For example, the intra-prediction process can be divided into three steps as follows:

Step 1: determining whether adjacent reference pixels of a current video block (such as a CU/PU/TU) are available (if present, and if not present, filling is performed), and acquiring the adjacent reference pixels.
Step 2: filtering the reference pixels.
Step 3: calculating prediction pixel values of the current video block according to filtered reference pixels and the prediction mode.

The current video block generally corresponds to 35 prediction modes, including a planar mode, a DC mode, and 33 angular prediction modes. As shown in Fig. 7B, $R_{x,y}$ denotes a pixel reconstructed value (already decoded pixel value) of an adjacent block, which is used as the reference pixel, while $P_{x,y}$ denotes a predicted value of a pixel of the current video block. In the foregoing intra-prediction process, the selection of adjacent reference pixels is a key step. For example, as shown in Fig. 7B, a size of a current TU is N×N, and a reference block or a reference pixel of the current video block can be divided into five parts according to the region: left lower (region A), left (region B), upper right (region C), upper (region D), upper right (region E), and there are 4N+1 samples, of which region C has only one reference sample. If the current TU is located at a border of an image, or a border of a slice or of a tile, an adjacent reference pixel may not exist or may not be available. In addition, in some cases, the block in which region A or region E is located may not have been encoded, at which time such reference pixels are not available. When the reference pixel does not exist or is not available, the HEVC standard will perform filling with the nearest adjacent pixel. For example, if the reference pixel of the region A does not exist or is not available, all reference pixels of the region A are filled with the bottommost pixel of region B. As another example, if the reference pixel of the region E does not exist or is not available, all reference pixels of the region E are filled with the rightmost pixel of region D. Note that if reference pixels of all regions are not available, the reference pixels are filled with fixed values.

Fig. 7C is a schematic diagram of a multiple reference line intra-prediction according to at least one embodiment of the present disclosure.

For example, in the video encoding and coding standard VVC, the intra-prediction method in the HEVC is improved by extending prediction angles from 33 types to 65 types, and an interpolation filter for angular prediction uses a 4-tap Gaussian interpolation filter. Meanwhile, since a multi-type tree (MTT) partitioning structure makes the coding units (CU) no longer limited to squares, and the CUs with various rectangle sizes are widely adopted, the VVC extends a prediction range of angular prediction in the HEVC, and introduces a wide angular intra-prediction mode (WAIP). In addition to improving the intra encoding technique in the HEVC, the VVC uses new efficient prediction techniques such as a cross-component linear mode (CCLM), a position-dependent intra-prediction combination (PDPC), a multiple reference line (MRL) intra-prediction, an intra sub-partition prediction (ISP), etc.

As shown in Fig. 7C, a multiple reference line intra-prediction uses multiple reference lines for intra-prediction. In the HEVC, only reference line 0, i.e., a line of encoded information, is used, whereas in the VVC, reference line 0, reference line 1, and reference line 3 can be used. Since in the reference lines with indices of 0-3, the reference lines with indices of 0 and 1 are relatively close to the pixels in the current video block with a high correlation, and they need to be preserved. The reference pixel line with an index of 3 is relatively far away from a current prediction unit, and can provide a relatively different reference pixel, while it is difficult for the reference pixel line with an index of 2 to provide additional reference pixel information, and at the same time it will bring about more complexity, so that it is discarded.

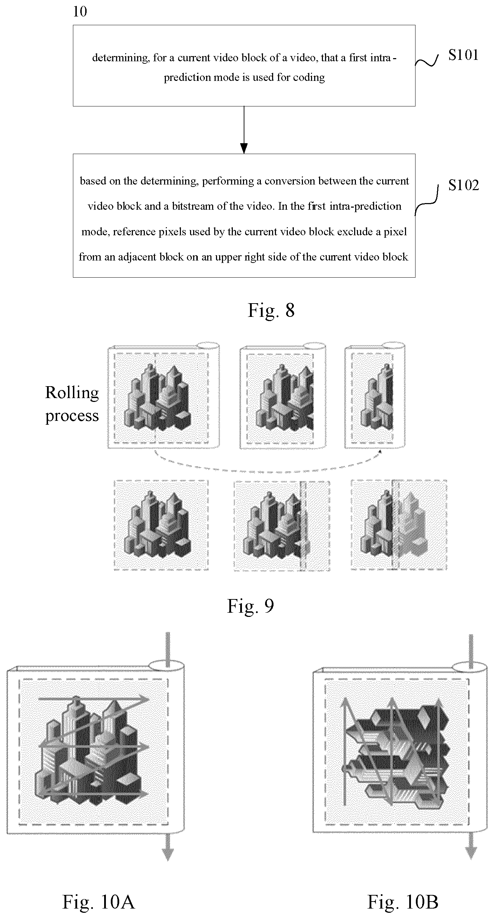

Fig. 8 is a schematic diagram of a video data processing method according to at least one embodiment of the present disclosure. Fig. 9 is a schematic diagram of a video coding for a rollable screen according to at least one embodiment of the present disclosure.

For example, in at least one embodiment of the present disclosure, a video data processing method 10 is provided. The video data processing method 10 can be applied to various application scenarios related to video coding, for example, to a terminal such as a mobile phone, a computer, etc. and for example, to a video website/video platform, etc. and the embodiments of the present disclosure are not particularly limited thereto. For example, as shown in Fig. 8, the video data processing method 10 includes the following operations S101 and S102.

Step S101: determining, for a current video block of a video, that a first intra-prediction mode is used for coding.

Step S102: based on the determining, performing a conversion between the current video block and a bitstream of the video. In the first intra-prediction mode, reference pixels used by the current video block exclude a pixel from an adjacent block on an upper right side of the current video block.

For example, in at least one embodiment of the present disclosure, the video may be a photographed photographic work, a video downloaded from a network, or a locally stored video, etc., as well as an LDR video, an SDR video, etc., and the embodiments of the present disclosure are not limited in any way.

For example, in at least one embodiment of the present disclosure, in the HEVC standard, the current video block has 35 intra-prediction modes to choose from, e.g., a planar mode, a DC mode, and 33 angle modes. For example, in the VVC standard, the number of intra angular prediction modes increases from 33 types to 65 types. In addition, new intra-prediction modes are introduced in the VVC standard, such as a matrix-weighted intra prediction (MIP), an intra sub partition prediction (ISP), a multiple reference line (MRL) intra-prediction, a position dependent intra-prediction, a cross-component linear model prediction, a wide angular intra-prediction mode, etc. For example, in an embodiment of the present disclosure, the available intra-prediction mode for the current video block includes at least one of the intra-prediction modes described above, and the embodiments of the present disclosure are not limited thereto.

For example, in at least one embodiment of the present disclosure, a most probable mode (MPM) list, also referred to as an intra-prediction mode candidate list, may be constructed for the current video block. It should be noted that the embodiments of the present disclosure do not limit the construction process of the MPM list, which can be set according to actual situations. For example, in at least one embodiment of the present disclosure, the MPM list may include 3 MPM candidates, 5 MPM candidates, or 6 MPM candidates. For example, in the HEVC standard, an MPM list comprising 3 MPM candidates may be constructed.

For example, in at least one embodiment of the present disclosure, in order to obtain the best encoding effect in the sense of rate-distortion, a rate distortion overhead of the current video block in each possible prediction mode is compared, and the mode with the smallest rate distortion overhead is taken as the optimal intra-prediction mode. For example, in some examples, after constructing the MPM list of the current video block, the intra-prediction mode having the smallest rate distortion overhead is selected as the "first intra-prediction mode" in the MPM list. Note that the "first intra-prediction mode" is used to indicate the intra-prediction mode finally selected for the current video block, e.g., the intra-prediction mode having the minimum rate-distortion overhead. The "first intra-prediction mode" is not limited to a specific intra-prediction mode or some intra-prediction modes, nor to a specific order.

For example, in at least one embodiment of the present disclosure, the first intra-prediction mode may be any of the above-described available intra-prediction modes, such as a planar intra-prediction mode, a DC intra-prediction mode, an angular intra-prediction mode, a multiple reference line intra-prediction mode, a cross-component linear prediction mode, an intra sub-partition prediction mode, etc., without limitation to embodiments of the present disclosure.

For example, in at least one embodiment of the present disclosure, in the first intra-prediction mode, reference pixels used by the current video block exclude a pixel of an adjacent block on an upper right side of the current video block, that is, in the first intra-prediction mode, the reference pixels used by the current video block does not include the pixel of the adjacent block on the upper right side of the current video block. For example, in some examples, for intra-prediction modes in the MPM list of the current video block, the pixel of the adjacent block on the upper right side of the current video block is excluded when the reference pixel is selected. Therefore, by removing the information dependence on the upper right adjacent block (reference pixel) of the current video block, and limiting the intra-prediction mode of the current video block to only use the encoded information of the upper, upper left, and left adjacent blocks of the current video block, the bitstream of the video can be partially decoded according to the display region actually displayed, thereby reducing the decoding resource consumption of the non-displayed part, effectively improving the efficiency of video coding, and further improving the use experience of the user on the product.

For example, in at least one embodiment of the present disclosure, the conversion between the current video block and the bitstream may include encoding the current video block into the bitstream and may include decoding the current video block from the bitstream. That is, the conversion process may include an encoding process as well as a decoding process, and embodiments of the present disclosure are not limited in this respect.

For example, as shown in Fig. 9, in at least one embodiment of the present disclosure, when the above-described video data processing method 10 is applied to a display apparatus with a rollable screen, the video content corresponding to a roll-up region may not be displayed during the rolling of the rollable screen, such that the bitstream corresponding to the roll-up region may not be decoded. In Fig. 9, the hatched region represents a region that does not participate in decoding. When the rollable screen is gradually rolled up from a fully deployed state, a size of a region that does not participate in decoding becomes gradually larger. Therefore, according to the actual display region of the rollable screen, the received bitstream may be partially decoded to achieve the technical effect of saving resource consumption in the decoding process, thereby improving the endurance of the product with the rollable screen and improving the user's experience on the product.

For example, in at least one embodiment of the present disclosure, in the first intra-prediction mode, the reference pixel of the current video block is determined based on availability of a first adjacent block of the current video block.

For example, in some examples, since only a part of the content (i.e. the content that needs to be displayed) in the bitstream of the video is decoded, not every adjacent block of the adjacent blocks of the current video may have already been decoded, that is, not every adjacent block may have a reconstructed value. In view of the above-mentioned technical problem, it is necessary to perform an availability check on the adjacent block of the current video block so as to judge whether the adjacent block is available.

For example, in at least one embodiment of the present disclosure, determining the reference pixel of the current video block based on the availability of the first adjacent block includes: determining the availability of the first adjacent block based on a position of the first adjacent block and a position of the current video. Note that, in the embodiments of the present disclosure, the "first adjacent block" is used to indicate any adjacent block of the current video block. The "first adjacent block" is not limited to a particular adjacent block or adjacent blocks, nor to a particular order.

Fig. 10A is a schematic diagram of a rotational axis direction of a rollable screen according to at least one embodiment of the present disclosure, and Fig. 10B is a schematic diagram of a rotational axis direction of another rollable screen according to at least one embodiment of the present disclosure.

For example, in at least one embodiment of the present disclosure, the encoding direction of the video is generally from left to right in the horizontal direction and then from top to bottom in the vertical direction. In the example shown in Fig. 10A, a rotational axis direction of the rollable screen (also referred to herein as the partitioning direction between the first display segment and the second display segment) is considered to be perpendicular to the encoding direction of the video. In the example shown in Fig. 10B, the rotational axis direction of the rollable screen (also referred to herein as the partitioning direction between the first display segment and the second display segment) is considered to be parallel to the encoding direction of the video.

It should be noted that, in embodiments of the present disclosure, the "first display segment" is used to refer to a part of video content or video region to be displayed in the current video frame, and the "second display segment" is used to refer to a part of the video content or the video region not to be displayed in the current video frame. The "first display segment" and the "second display segment" are not limited to a particular video area or video content, or to some video areas or video contents, nor to a particular order.

For example, in the example shown in Fig. 10A, as a rotation axis of the rollable screen moves from left to right, the region to be displayed also expands to the right, i.e., the to-be-decoded region expands to the right. In the intra-prediction mode, prediction of the current video block needs to be performed using decoding information of the adjacent block of the current video block within the same picture. It may thus occur that an upper right adjacent block of the current video block has not yet been decoded. To avoid this situation, a range of the reference block/reference pixel of the current video block may be defined during the encoding process, removing the information dependency on the upper right adjacent block of the current video block.

For example, in at least one embodiment of the present disclosure, in response to the encoding direction of the video being perpendicular to the partitioning direction (as in the example shown in Fig. 10A), in response to the first adjacent block being located on the upper right side of the current video block, the first adjacent block is determined to be unavailable.

For example, in some examples, when the rotational axis direction of the rollable screen (i.e. the partitioning direction of the current video frame) is perpendicular to the encoding direction of the video, for example, as shown in Fig. 10A, in response to the adjacent block of the current video block being located on the upper right side of the current video block, the adjacent block is considered to be unavailable.

For example, in some examples, as shown in Fig. 7B, when the adjacent block is located in the region E, the adjacent block is considered unavailable. Because there may not be reconstructed pixel values for the adjacent block located in the region E. As another example, in some examples, as shown in Fig. 7C, the adjacent block is considered unavailable when the adjacent block is located on a part to the right of the dotted line of segment E or on segment F. A reconstructed pixel value may not exist for the adjacent block on the part to the right of the dotted line of segment E or on segment F.

For example, in some examples, when the rotational axis direction of the rollable screen (i.e. the partitioning direction of the current video frame) is parallel to the encoding direction of the video, for example, in the example shown in Fig. 10B, there is no need to remove the information dependency on the upper right adjacent block. Therefore, in response to the rotational axis direction of the rollable screen (i.e. the partitioning direction of the current video frame) is parallel to the encoding direction of the video, the encoding process does not need to be modified.

For example, in at least one embodiment of the present disclosure, determining the reference pixel of the current video block based on the availability of the first adjacent block includes: in response to the first adjacent block being unavailable, determining a pixel value of the first adjacent block based on adjacent block(s), other than the first adjacent block, of the current video block.

For example, in some examples, since the adjacent block on an upper right area is not available (because there may not be a pixel reconstructed value), the information of the adjacent block located in a left region, an upper region, and/or an upper left region of the current video block may be used for supplementation to remove the information dependency on the adjacent block of the upper right region.

For example, in at least one embodiment of the present disclosure, determining a pixel value of the first adjacent block based on adjacent block(s), other than the first adjacent block, of the current video block includes: determining the pixel value of the first adjacent block based on an upper left adjacent block and at least one upper adjacent block of the current video block.

For example, in some examples, as shown in Fig. 7B, if the current video block is located at a right border of the CU, the region E does not employ the encoded information but instead generates the information of the region E using the information of the region C and the region D for supplementation. For example, in the example shown in Fig. 7B, the pixel value of the adjacent block located in the region C is denoted as $R_{0,0}$, the pixel values of the adjacent blocks located in the region D are denoted as $R_{1,0}, R_{2,0}...R_{N,0}$, and the pixel values of the adjacent blocks located in the region E are denoted as $R_{N+1,0}, R_{N+2,0}...R_{2N,0}$.

For example, in at least one embodiment of the present disclosure, determining the pixel value of the first adjacent block based on an upper left adjacent block and at least one upper adjacent block of the current video block includes: in response to satisfying a first condition, obtaining the pixel value of the first adjacent block based on a pixel value of a rightmost block of the at least one upper adjacent block and a pixel value of the upper left adjacent block.

It should be noted that, in the embodiments of the present disclosure, the "first condition" is not limited to a particular condition or some conditions, nor to a particular order. For example, in some examples, the first condition includes that a difference between an average value of the pixel value of the upper left adjacent block (located in the region C) and the pixel value of the rightmost block of the at least one upper adjacent block (located at the region D) and an average value of pixel values of all blocks of the at least one upper adjacent block is less than a certain threshold value.

For example, in some examples, the threshold value is equal to bitdepth/2, where the bitdepth represents a bit depth of the video. It should be noted that the embodiment of the present disclosure does not specifically limit the value of the foregoing threshold value, and it may be set according to actual requirements.

For example, in some examples, as shown in Fig. 7B, when the difference between the average value of the pixel value ($R_{0,0}$) of the upper left adjacent block (located in the region C) and the pixel value ($R_{N,0}$) of the rightmost block in the at least one upper adjacent block (located in the region D) and the average value of the pixel values ($R_{1,0}, R_{2,0}...R_{N,0}$) of all the blocks in the at least one upper adjacent block (located in the region D) is less than the certain threshold value, the pixel values ($R_{N+1,0}, R_{N+2,0}...R_{2N,0}$) of the upper right adjacent block (the region E) may be generated using the pixel value ($R_{0,0}$) of the upper left adjacent block and the pixel value ($R_{N,0}$) of the rightmost block of the at least one upper adjacent block (located in the region D) for supplementation.

For example, in at least one embodiment of the present disclosure, the pixel value of the first adjacent block may be obtained by performing linear interpolation using the pixel value ($R_{N,0}$) of the rightmost block of the at least one upper adjacent block and the pixel value ($R_{0,0}$) of the upper left adjacent block. It should be noted that the calculation method of the linear interpolation as shown in the following Equation 1 can also be set according to practical requirements, and the embodiments of the present disclosure do not specifically limit this aspect.

For example, in at least one embodiment of the present disclosure, in response to not satisfying the first condition, the pixel value of the first adjacent block is determined based on a pixel value of the upper left adjacent block. For example, in some examples, the pixel value of the first adjacent block is obtained by copying the pixel value of the upper left adjacent block, i.e. the pixel value of the first adjacent block is set to be equal to the pixel value of the upper left adjacent block.

For example, in the example shown in Fig. 7B, when the difference between the average value of the pixel value ($R_{0,0}$) of the upper left adjacent block (located in the region C) and the pixel value ($R_{N,0}$) of the rightmost block of the at least one upper adjacent block (located in the region D) and the average value of the pixel values ($R_{1,0}, R_{2,0}...R_{N,0}$) of all blocks of the at least one upper adjacent block (located in the region D) is greater than or equal to the certain threshold value, using the pixel value ($R_{0,0}$) of the upper left adjacent block may be directly copied for supplementation to generate the pixel values ($R_{N+1,0}, R_{N+2,0}...R_{2N,0}$) of the upper right adjacent block (the region E).

For example, in at least one embodiment of the present disclosure, in conjunction with Fig. 7B, Equation 1 is provided to represent the manner in which pixel values (e.g. $R_{N+1,0}, R_{N+2,0}...R_{2N,0}$ in Fig. 7B) for the upper right adjacent block are calculated as follows:

$$R_{N+i,0} = \begin{cases} \dfrac{i+1}{N}(R_{N,0} - R_{0,0}) + R_{N,0} \,, \; \text{abs}\left(\dfrac{R_{N,0} + R_{0,0}}{2} - \dfrac{1}{N+1}\sum_{m=0}^{N} R_{m,0}\right) < (\, 1 >> \dfrac{bitdepth}{2}) \\ R_{N,0} \;\;, \; other\ conditions \end{cases}$$

(Equation 1)

In Equation 1, $R_{m,0}$ denotes a pixel located at the coordinate (m, 0), the bitdepth denotes a bit depth of the video, the size of the current video block is $N \times N$, i is an integer, and $0 < i \leq N$.

For example, in at least one embodiment of the present disclosure, for the multiple reference line intra-prediction method shown in Fig. 7C, the pixel information of the unavailable adjacent block (e.g. the adjacent block located to the right of the dotted line of the segment E in Fig. 7C) may be generated according to the pixel information of each reference line. Since the segment F itself is generated from the segment E, there is no need to process the segment F. For example, in some examples, the pixel information of the adjacent block on a part to the right of the dotted line of the segment E may be calculated and generated according to Equation 1 described above. The detailed calculation will not be repeated here, and reference can be made to the relevant description of Equation 1.

For example, with the video data processing method according to at least one embodiment of the present disclosure, information dependence of the current video block on unavailable adjacent block(s) may be removed during video coding.

For example, in at least one embodiment of the present disclosure, for step S102, performing a conversion between the current video block of a current video frame and the bitstream of the video may include an encoding process and a decoding process. For example, in some examples, the received bitstream is fully decoded for display. As another example, in some instances, where the display terminal only partially displays, e.g., the display terminal has a rollable screen as shown in Fig. 1, only partial decoding of the received bitstream is required, thereby reducing the use of decoding resources and improving the coding efficiency of the video.

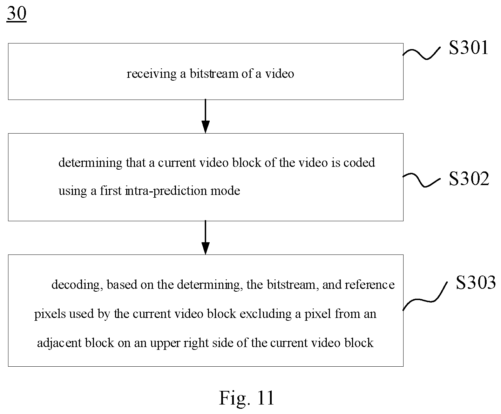

Fig. 11 is a schematic diagram of another video data processing method according to at least one embodiment of the present disclosure.

For example, in at least one embodiment of the present disclosure, another video data processing method 30 is provided. The video data processing method 30 can be applied to various application scenarios related to video decoding (i.e., applied to a decoding side). For example, as shown in Fig. 11, the video data processing method 30 includes the following operations S301 to S303.

Step S301: receiving a bitstream of a video.

Step S302: determining that a current video block of the video is coded using a first intra-prediction mod.

Step S303: decoding, based on the determining, the bitstream, and reference pixels used by the current video block excluding a pixel from an adjacent block on an upper right side of the current video block.

For example, in at least one embodiment of the present disclosure, in response to a current video frame including a first display segment to be displayed and a second display segment not to be displayed, a to-be-decoded region corresponding to the first display segment is obtained, and the bitstream is partially decoded.

Since only the first display segment to be displayed needs to be decoded, thus the to-be-decoded region in the decoding process is defined. For example, in the embodiments of the present disclosure, the to-be-decoded region is bounded by the border of the coding unit, or the coding unit is taken as a unit of the to-be-decoded region. Note that, in the embodiments of the present disclosure, the coding unit is described taking the coding tree unit (CTU) as an example.

For example, in some examples, the decoding area is bounded by a border of a coding tree unit (CTU) of the first display segment, and no decoding is performed to the right or below the border, thereby saving decoding resources and improving coding efficiency.

For example, in at least one embodiment of the present disclosure, the to-be-decoded region corresponding to the first display segment may be determined based on an encoding direction of the video, a partitioning direction between the first display segment and the second display segment, a quantity of pixel(s) of the first display segment, and a size of the CTU.

For example, in at least one embodiment of the present disclosure, in response to the encoding direction of the video being perpendicular to the partitioning direction, a quantity of the CTU(s) for each line of the to-be-decoded region is determined by applying a function to a ratio between the quantity of pixel(s) of the first display segment and the size of the CTU.

For example, in the example shown in Fig 10A, when the rotational axis direction of the rollable screen (i.e., the partitioning direction of the current video frame) is perpendicular to the encoding direction of the video, a right part of a picture of the current video frame of the video is rolled up, and a left area of the rotational axis is the to-be-decoded region. Therefore, the quantity n of the CTU(s) necessary for each line of the to-be-decoded region needs to be calculated.

For example, in some examples, the quantity n of the CTU(s) is calculated by Equation 2 as follows:

$$n = \mathrm{ceil}\ (l/\mathrm{CTU\_size}) \qquad\qquad (\text{Equation 2})$$

In Equation 2, the function ceil() represents an up-rounding function, $l$ represents the quantity of pixel(s) in the segment to be displayed (the first display segment), and CTU_size represents the size of the CTU. For example, the size of the CTU may be $32 \times 32$, $64 \times 64$, $128 \times 128$, etc. and the embodiments of the present disclosure are not limited thereto and may be set according to practical requirements.

For example, in at least one embodiment of the present disclosure, in response to the encoding direction of the video being parallel to the partitioning direction, a quantity of line(s) of the coding tree unit(s) (CTU) of the to-be-decoded region is determined by applying a function to a ratio between the quantity of pixel(s) of the first display segment and the size of the coding tree unit (CTU).

For example, in the example shown in Fig 10B, when the rotational axis direction of the rollable screen (i.e., the partitioning direction of the current video frame) is parallel to the encoding direction of the video, a lower part of a picture of the current video frame of the video is rolled up, and an upper region of the rotational axis is the to-be-decoded region. Therefore, the quantity T of the CTU lines of the to-be-decoded region needs to be calculated.

For example, in some examples, the quantity T of lines of the CTUs is calculated by Equation 3 as follows:

$$T = \mathrm{ceil}\ (l/\mathrm{CTU\_size}) \qquad\qquad (\text{Equation 3})$$

In Equation 3, the function ceil() represents an up-rounding function, $l$ represents the quantity of pixel(s) in the segment to be displayed (the first display segment), and CTU_size represents the size of the CTU. For example, the size of the CTU may be $32 \times 32$, $64 \times 64$, $128 \times 128$, etc. and the embodiments of the present disclosure are not limited thereto and may be set according to practical requirements.

For example, in at least one embodiment of the present disclosure, default pixel values may be used for filling the un-decoded region (corresponding to the second display segment) other than the to-be-decoded region. For example, zero pixels are used for filling. Of course, other pixel values may be used for filling, and the embodiments of the present disclosure are not limited thereto and may be set according to actual requirements. In this way, the video coding efficiency can be improved, the coding process can be simplified, and product energy source can also be saved.

For example, in at least one embodiment of the present disclosure, for a decoding side, based on a received bitstream of the video, it may be determined whether the current video applies the above-described video data processing method 10/30 and a corresponding video expansion direction. For example, in some examples, when the syntax element "enhanced_tile_enabled_hor" is included in the received bitstream (or the syntax element has a value of 1), the above-described video data processing method 10/30 is applied to the current video and the expansion direction of the video is horizontal (e.g. from left to right). It is noted that in the embodiments of the present disclosure, for the decoding process, the application of the above-described video data processing method 10/30 is not only determined based on the relevant syntax elements in the received bitstream but also takes into account the actual situation of the display terminal. For example, in some examples, the above-described video data processing method 10/30 is not applied when the video display mode of the display terminal does not match the video expansion manner identified in the bitstream. For example, it is determined that an enhanced slice display mode is not applied to the current video when the associated syntax elements in the bitstream indicate that the current video applies the above-described video data processing method 10/30 and the expansion direction of the video is the horizontal direction, while the video display manner of the display terminal is scrolling in the vertical direction. As another example, it is determined that the above-described video data processing method 10/30 is not applied to the current video when the associated syntax elements in the bitstream indicate that the above-described video data processing method 10/30 is applied to the current video and the expansion direction is the horizontal direction, while the video display manner of the display terminal is conventional display (e.g. full screen display) without requiring scrolling. The disclosed embodiments do not impose specific limitations on this and can be set according to actual situations.

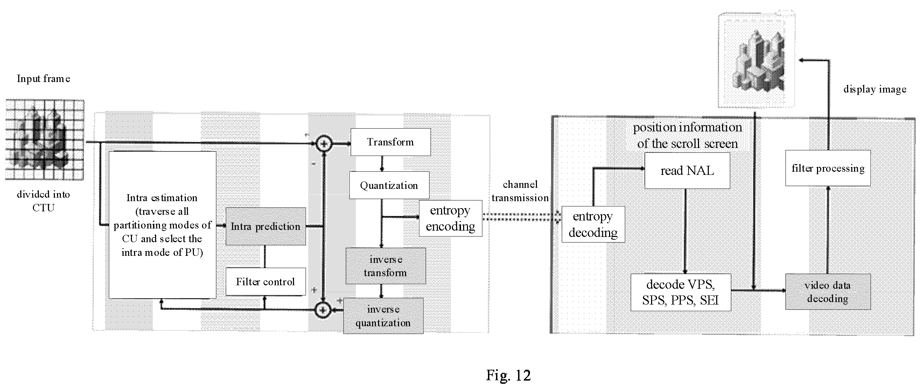

For example, in at least one embodiment of the present disclosure, when the display terminal is in a fully rolled-up state, i.e., there is no region to be displayed, the decoding region may still be determined according to Equations 2 and 3 described above (e.g. based on the quantity of pixel(s) in the segment to be displayed and the size of the CTU indicated by the syntax element). Fig. 12 is a schematic block diagram of a video coding system in an all intra configuration according to at least one embodiment of the present disclosure.

For example, in at least one embodiment of the present disclosure, a general description of the video coding system of Fig. 12 may be seen from the associated descriptions of Fig. 2- Fig. 4 and will not be repeated here. In an embodiment of the present disclosure, adjustment is made in the intra-prediction unit for the encoding process. For example, a range to which the current video block selects the reference pixel is limited, removing the dependence of the current video block on the encoding information of the adjacent block on the upper right side. For the encoding process, adjustment is made in the video data decoding unit. For example, a to-be-decoded region is set, and decoding is performed only on the to-be-decoded region, so as to reduce the consumption of decoding resources by the non-displayed part and improving coding efficiency.

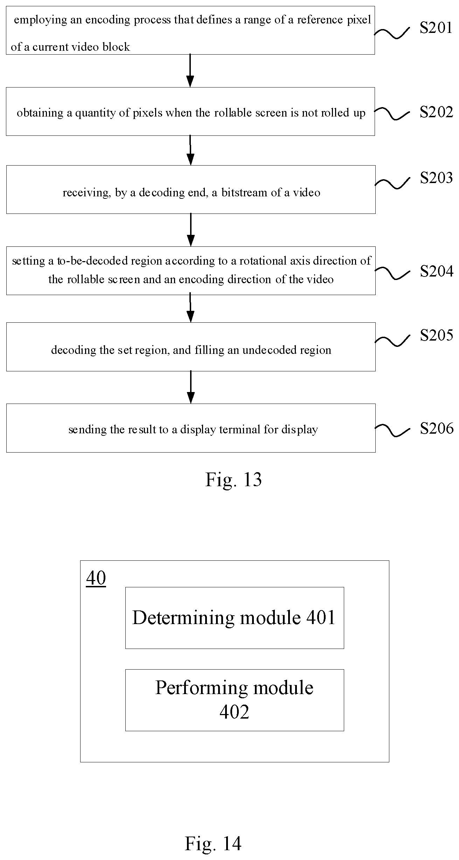

Fig. 13 is a schematic flow diagram of a video data processing method in an all intra configuration according to at least one embodiment of the present disclosure.

For example, in at least one embodiment of the present disclosure, a video data processing method is provided, as shown in Fig. 13. The video data processing method includes steps S201-S206.

Step S201: employing an encoding process that defines a range of a reference pixel of a current video block.

Step S202: obtaining a quantity of pixels when the rollable screen is not rolled up.

Step S203: receiving, by a decoding end, a bitstream of a video.

Step S204: setting a to-be-decoded region according to a rotational axis direction of the rollable screen and an encoding direction of the video.

Step S205: decoding the set region, and filling an undecoded region.

Step S206: sending the result to a display terminal for display.

It should be noted that the specific operations with respect to each of the steps S201-S206 shown in Fig. 13 are described in detail above and will not be described in detail herein.

Therefore, with the video data processing method according to at least one embodiment of the present disclosure, the bitstream of the video can be partially decoded according to the area to be displayed, thereby reducing decoding resource consumption of a non-displayed part and improving coding efficiency.

It should be noted that the order of execution of the various steps of the video data processing method 10 is not limited in the various embodiments of the present disclosure, and although the execution of the various steps has been described above in a particular order, it should not be construed as limiting the embodiments of the present disclosure. The various steps in the video data processing method 10 may be performed serially or in parallel, as may be desired. For example, video data processing method 10 may also include more or fewer steps, and embodiments of the present disclosure are not limited in this respect.

Fig. 14 is a schematic block diagram of a video data processing apparatus according to at least one embodiment of the present disclosure.

For example, at least one embodiment of the present disclosure provides a video data processing apparatus 40, as shown in Fig. 14. The video data processing apparatus 40 includes a determination module 401 and a performing module 402. For example, the determination module 401 is configured for, with regard to a current video block of the video, determining to use a first intra-prediction mode for coding. For example, the determination module 401 may implement step S101, and a specific implementation method thereof may refer to the relevant description of step S101, which will not be described in detail herein. The performing module 402 is configured for, based on the determination, performing conversion between the current video block and a bitstream of the video. In the first intra-prediction mode, reference pixels used by the current video block excludes a pixel of an adjacent block on an upper right side of the current video block. For example, the performing module 402 may implement step S102, and a specific implementation method thereof may refer to the relevant description of step S102, which will not be described in detail herein.

It should be noted that the determination module 401 and the performing module 402 may be implemented by software, hardware, firmware, or any combination thereof, for example, as a determination circuit 401 and a performing circuit 402, respectively, and the embodiments of the present disclosure do not limit their embodiments.

It should be appreciated that video data processing apparatus 40 according to at least one embodiment of the present disclosure may implement similar technical effects to video data processing method 10 previously described. For example, in the video data processing apparatus 40 according to at least one embodiment of the present disclosure, by the above-mentioned method, it is possible to partially decode the bitstream according to an area actually required to be displayed, thereby reducing the consumption of decoding resources of the non-displayed part and improving coding efficiency.

It should be noted that in the embodiments of the present disclosure, the video data processing apparatus 40 may include more or less circuits or units, and the connection relationship between the respective circuits or units is not limited and may be determined according to actual requirements. The specific constitution of each circuit is not limited, and may be constituted by an analog component according to a circuit principle, may be constituted by a digital chip, or may be constituted in other suitable manners.

For example, at least one embodiment of the present disclosure further provides a display apparatus, including: a video data processing apparatus and a rollable screen, The video data processing apparatus is configured to decode the received bitstream according to the method of any one of the foregoing embodiments and send a decoded pixel value to the rollable screen for display. For example, in some examples where the rollable screen is fully expanded and there is no non-display region, the video data processing apparatus fully decodes the received bitstream. As another example, in other examples, as shown in Fig. 1, the rollable screen includes a rolled portion and an unrolled portion, i.e. there is a display region and a non-display region, and the video data processing apparatus partially decodes the received bitstream.

For example, in at least one embodiment of the present disclosure, in response to the rollable screen including a display region and a non-display region in operation, the video data processing apparatus decodes the bitstream based on a size of the display area. For example, as shown in Fig. 1, when the rollable screen is in a partially expanded state, the video data processing apparatus needs only decode the content corresponding to the display region. For example, the video data processing apparatus may determine the to-be-decoded region by determining the quantity of pixel(s) corresponding to the display area according to the size of the display area. The operation of determining the to-be-decoded region has been described in detail in the foregoing and will not be described in detail herein.

For example, in at least one embodiment of the present disclosure, the display apparatus includes a curling state judgment apparatus in addition to the video data processing apparatus and the rollable screen. For example, the curling state judgment apparatus is configured to detect a size of a display region of the rollable screen and transmit the size of the display area to the video data processing apparatus such that the video data processing apparatus decodes the bitstream based on the size of the display area. Note that the curling state judgment apparatus may be implemented by a software, a hardware, a firmware, or any combination thereof, for example, as a curling state judgment circuit, and the embodiments of the present disclosure do not limit the embodiments of the curling state judgment apparatus.

It should be noted that the embodiments of the present disclosure do not limit the type of display apparatus. For example, the display apparatus may be a mobile terminal, a computer, a tablet computer, a telephone watch, a television, etc. and embodiments of the present disclosure are not limited in this respect. Also, embodiments of the present disclosure do not limit the type of the rollable screen. For example, in embodiments of the present disclosure, the rollable screen may be any type of display screen having a variable display area, including but not limited to the rollable screen type shown in Fig. 1. For example, in the embodiments of the present disclosure, the video data processing apparatus included in the display apparatus may be implemented as the video data processing apparatus 40/90/600 etc. mentioned in the present disclosure, and the embodiments of the present disclosure do not limit the specific embodiments of the video data processing apparatus.

It should be noted that in the embodiments of the present disclosure, the display apparatus may include more or less circuits or units, and the connection relationship between the respective circuits or units is not limited and may be determined according to actual requirements. The specific constitution of each circuit is not limited, and may be constituted by an analog component according to a circuit principle, may be constituted by a digital chip, or may be constituted in other suitable manners.

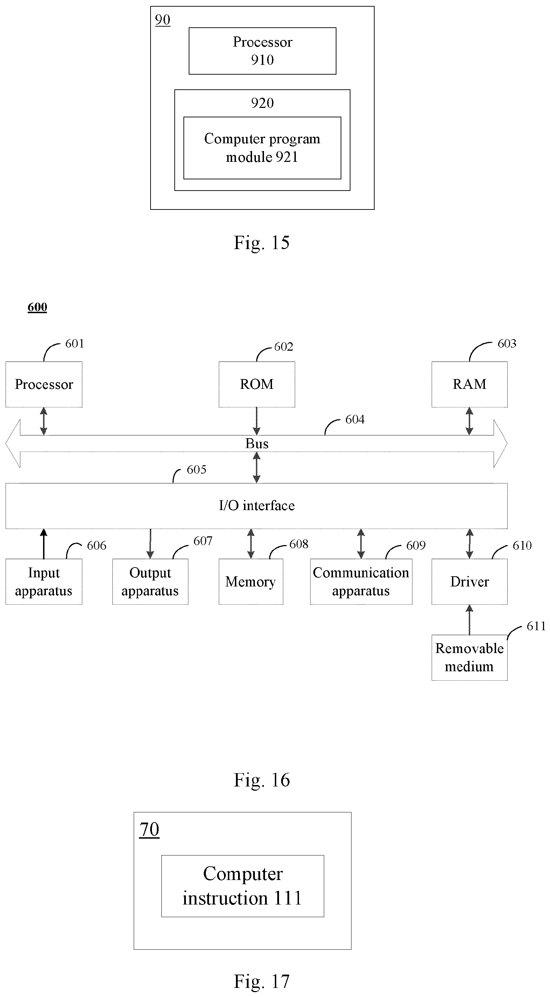

Fig. 15 is a schematic block diagram of another video data processing apparatus according to at least one embodiment of the present disclosure.

At least one embodiment of the present disclosure further provides a video data processing apparatus 90. As shown in Fig. 15, the video data processing apparatus 90 includes a processor 910 and a memory 920. The memory 920 includes one or more computer program modules 921. One or more computer program modules 921 are stored in the memory 920 and configured to be performed by the processor 910, the one or more computer program modules 921 include instructions for performing the video data processing method 10 according to at least one embodiment of the present disclosure, which, when executed by processor 910, may perform one or more steps of video data processing method 10 according to at least one embodiment of the present disclosure. The memory 920 and the processor 910 may be interconnected by a bus system and/or other form of connection mechanism (not shown).

For example, the processor 910 may be a central processing unit (CPU), a digital signal processor (DSP), or other form of processing unit having data processing capabilities and/or program execution capabilities, such as a field programmable gate array (FPGA) or the like; for example, the central processing unit (CPU) may be an X86 or ARM architecture or the like. The processor 910 may be a general purpose or special-purpose processor that may control other assemblies in the video data processing apparatus 90 to perform desired functions.

For example, the memory 920 may include any combination of one or more computer program products, which may include various forms of computer-readable storage media, such as a volatile memory and/or a non-volatile memory. The volatile memory can include, for example, random access memory (RAM) and/or cache memory (cache), etc. The volatile memory may include, for example, a read-only memory (ROM), a hard disk, an erasable programmable read-only memory (EPROM), a portable compact disc read-only memory (CD-ROM), a USB memory, a flash memory, etc. The one or more computer program modules 921 may be stored on the computer-readable storage medium, and the processor 910 may execute the one or more computer program modules 921 to perform the various functions of the video data processing apparatus 90. Various applications and various data may also be stored in the computer-readable storage medium, as well as various data used and/or generated by the applications. Specific functions and technical effects of the video data processing apparatus 90 can be seen from the foregoing description of the video data processing method 10, and will not be described in detail herein.

Fig. 16 is a schematic block diagram of yet another video data processing apparatus according to at least one embodiment of the present disclosure.

The terminal device in the embodiment of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (e.g. in-vehicle navigation terminal), etc. and a fixed terminal such as a digital TV, a desktop computer, etc. The video data processing apparatus 600 shown in Fig. 16 is only one example and should not impose any limitation on the functionality and scope of use of the embodiments of the present disclosure.

As shown in Fig. 16, in some examples, the video data processing apparatus 600 includes a processing apparatus (e.g. a central processor, a graphics processor, etc.) 601 that may perform various suitable actions and processes in accordance with programs stored in a read-only memory (ROM) 602 or programs loaded from a storage apparatus 608 into a random access memory ( RAM) 603. In the RAM 603, various programs and data required for the operation of the computer system are also stored. The processing apparatus 601, the ROM 602 and the RAM 603 are connected to each other via a bus 604. An input/output (I/O) interface 605 is also coupled to the bus 604.

In general, the following components may be connected to the I/O interface 605: an input apparatus 606 including, for example, a touch screen, a touch pad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disc, etc.; and a communication apparatus 609 including network interface cards such as LAN cards and modems. The communication apparatus 609 allows the video data processing apparatus 600 to communicate in a wireless or wired manner with other devices to exchange data and perform communication processing via networks such as the Internet. The driver 610 is also connected to the I/O interface 605 as desired. A removable medium 611, such as a magnetic disk, optical disk, magneto-optical disk, semiconductor memory, or the like, is mounted on the drive 610 as desired such that a computer program read therefrom is installed into the storage apparatus 608 as desired. Although Fig. 16 illustrates a video data processing apparatus 600 including various apparatuses, it should be understood that not all illustrated apparatuses are required to be implemented or included. More or fewer apparatuses may alternatively be implemented or included.

For example, the video data processing apparatus 600 may further include a peripheral interface (not shown) or the like. The peripheral interface may be of various types, such as a USB interface, a lighting interface, etc. The communication apparatus 609 may communicate via wireless communication with networks such as the Internet, intranets and/or wireless networks such as cellular telephone networks, wireless local area networks (LAN) and/or metropolitan area networks (MAN) and other devices. The wireless communication may use any of a variety of communication standards, protocols, and technologies including, but not limited to, global system for mobile communications (GSM), enhanced data GSM environment (EDGE), wideband code division multiple access (W-CDMA), code division multiple access (CDMA), time division multiple access (TDMA), bluetooth, Wi-Fi (e.g. based on the IEEE 802.11a, IEEE 802.11b, IEEE 802.11g, and/or IEEE 802.11n standards), voice over internet protocol (VoIP), Wi-MAX, protocols for e-mail, instant messaging and/or short message service (SMS), or any other suitable communication protocols.

For example, the video data processing apparatus 600 may be any apparatus such as a cell phone, a tablet computer, a notebook computer, an e-book, a television, or any combination of data processing apparatus and hardware, and embodiments of the present disclosure are not limited in this aspect.

For example, the process described above with reference to the flow diagram may be implemented as computer software programs in accordance with the embodiment of the present disclosure. For example, an embodiment of the present disclosure includes a computer program product including a computer program embodied on a non-transitory computer-readable medium, the computer program including program codes for performing the method illustrated in the flow diagram. In such an embodiment, the computer program may be downloaded and installed from the network via a communication apparatus 609, or from the storage apparatus 608, or from the ROM 602. When the computer program is executed by the processing apparatus 601, the video data processing method 10 disclosed in the present disclosure is performed.

Note that the computer-readable medium described above in the present disclosure can be a computer-readable signal medium or a computer-readable storage medium, or any combination of the two. The computer-readable storage medium can be, for example, but not limited to, an electronic, magnetic, optical, electromagnetic, infrared, or semiconductor system, apparatus, or means, or a combination of any of the foregoing. More specific examples of computer-readable storage medium may include, but are not limited to, an electrical connection with one or more wires, a portable computer disc, a hard drive, a random access memory (RAM), a read-only memory (ROM), an erasable programmable read-only memory (EPROM) or a flash memory (FLASH), a fiber optic, a portable compact disc read-only memory (CD-ROM), an optical storage device, a magnetic storage device, or any suitable combination thereof. In the embodiments of the present disclosure, the computer-readable storage medium may be any tangible medium that can contain or store programs for use by or in connection with an instruction execution system, apparatus, or means. In the embodiments of the present disclosure, the computer-readable signal medium may include a data signal, embodied in baseband or propagated as part of a carrier wave, that carries the computer-readable program codes. Such propagated data signals may take many forms, including but not limited to electromagnetic signals, optical signals, or any suitable combination of the preceding. The computer-readable signal medium can also be any computer-readable medium other than a computer-readable storage medium, and the computer-readable signal medium can send, propagate, or transport the programs for use by or in connection with the instruction execution system, apparatus, or means. The program codes contained on the computer-readable medium may be transmitted over any suitable medium, including but not limited to: a wire, a fiber optic cable, an RF (radio frequency), and the like, or any suitable combination of the foregoing.

The computer-readable medium mentioned above may be included in the video data processing apparatus 600 mentioned above; it can also exist independently without being assembled into the video data processing apparatus 600.

Fig. 17 is a schematic block diagram of a non-instantaneous readable storage medium according to at least one embodiment of the present disclosure.

An embodiment of the present disclosure also provides a non-instantaneous readable storage medium. Fig. 17 is a schematic block diagram of a non-instantaneous readable storage medium according to at least one embodiment of the present disclosure. As shown in Fig. 17, the non-transitory readable storage medium 70 has stored thereon computer instructions 111 that when executed by the processor perform one or more of the steps of the video data processing method 10 described above.

For example, the non-transitory readable storage medium 70 may be any combination of one or more computer-readable storage media, e.g. one computer-readable storage medium containing computer-readable program code for determining, for a current video block of a video, to use a first intra-prediction mode for coding, while another computer-readable storage medium containing computer-readable program codes for performing, based on the determination, a conversion between the current video block and a bitstream of the video, wherein in the first intra-prediction mode, a reference pixel used by the current video block excludes a pixel of an adjacent block on an upper right side of the current video block. Of course, the various program codes described above may also be stored on the same computer-readable medium, and embodiments of the present disclosure are not limited in this respect.

For example, when the program codes are read by the computer, the computer may execute the program codes stored in the computer storage medium to perform, for example, the video data processing method 10 according to any one of the embodiments of the present disclosure.

For example, the storage medium may include a memory card of a smart-phone, a storage component of a tablet computer, a hard disk of a personal computer, a random access memory (RAM), a read-only memory (ROM), an erasable programmable read-only memory (EPROM), a portable compact disc read-only memory (CD-ROM), a flash memory, or any combination of the foregoing storage media, as well as other suitable storage media. For example, the readable storage medium may also be the memory 920 of Fig. 15, and the description may be seen from the foregoing and will not be repeated here.

In this disclosure, the term "plural" refers to two or more, unless otherwise explicitly defined.

Other embodiments of the disclosure will be readily apparent to those skilled in the art after considering the specification and practicing the disclosure disclosed herein. This disclosure is intended to cover any variations, uses, or adaptations of this disclosure, which follow the general principles of this disclosure and include common sense or common technical means in this technical field that are not disclosed in this disclosure. The specification and examples are to be regarded as exemplary only, with a true scope and spirit of the disclosure indicated by the following claims.

It should be understood that the present disclosure is not limited to the precise structure that has been described above and shown in the drawings, and various modifications and changes can be made without departing from its scope. The scope of the present disclosure is limited only by the appended claims.

**Claims**

1. A video data processing method, comprising:

   determining, for a current video block of a video, that a first intra-prediction mode is used for coding, and based on the determining, performing a conversion between the current video block and a bitstream of the video, wherein in the first intra-prediction mode, reference pixels used by the current video block exclude a pixel from an adjacent block on an upper right side of the current video block.

2. The method according to claim **1,** wherein in the first intra-prediction mode, determining the reference pixels of the current video block based on an availability of a first adjacent block of the current video block.

3. The method according to claim 2, wherein the determining the reference pixels of the current video block based on an availability of a first adjacent block of the current video block, comprises:
   determining the availability of the first adjacent block based on a position of the first adjacent block and a position of the current video block.

4. The method according to claim 3, wherein the determining the availability of the first adjacent block based on a position of the first adjacent block and a position of the current video block, comprises:
   in response to the first adjacent block being on the upper right side of the current video block, determining that the first adjacent block is unavailable.

5. The method according to any one of claims 2-4, wherein the determining the reference pixels of the current video block based on an availability of a first adjacent block of the current video block, comprises: in response to the first adjacent block being unavailable, determining pixel values of the first adjacent block based on other adjacent blocks of the current video block except the first adjacent block.

6. The method according to claim 5, wherein the determining pixel values of the first adjacent block based on other adjacent blocks of the current video block except the first adjacent block, comprises:
   determining the pixel values of the first adjacent block based on an upper left adjacent block and at least one upper adjacent block of the current video block.

7. The method according to claim 6, wherein the determining the pixel values of the first adjacent block based on an upper left adjacent block and at least one upper adjacent block of the current video block, comprises:
   in response to satisfying a first condition, determining the pixel values of the first adjacent block based on pixel values of a rightmost block of the at least one upper adjacent block and pixel values of the upper left adjacent block.

8. The method according to claim 7, wherein the determining the pixel values of the first adjacent block based on pixel values of a rightmost block of the at least one upper adjacent block and pixel values of the upper left adjacent block, comprises:
   determining the pixel values of the first adjacent block by performing linear interpolation using the pixel values of the rightmost block of the at least one upper adjacent block and the pixel values of the upper left adjacent block.

9. The method according to claim 7 or 8, wherein the first condition comprises that a difference between an average value of the pixel values of the upper left adjacent block and the pixel values of the rightmost block of the at least one upper adjacent block and an average value of pixel values of all blocks of the at least one upper adjacent block is less than a threshold value.

10. The method according to claim 9, wherein the threshold value is equal to bitdepth/2, where the bitdepth represents a bit depth of the video.

11. The method according to any one of claims 6-10, wherein the determining the pixel values of the first adjacent block based on an upper left adjacent block and at least one upper adjacent block of the current video block, comprises: in response to not satisfying a first condition, determining the pixel values of the first adjacent block based on pixel values of the upper left adjacent block.

12. The method according to claim 11, wherein the determining the pixel values of the first adjacent block based on pixel values of the upper left adjacent block, comprises: setting the pixel values of the first adjacent block to be equal to the pixel values of the upper left adjacent block.

13. The method according to any one of claims 1-12, wherein the first intra-prediction mode comprises a planar intra-prediction mode, a DC intra-prediction mode, an angular intra-prediction mode, or a multiple reference line intra-prediction mode.

14. A video data processing method, comprising:

receiving a bitstream of a video;
determining that a current video block of the video is coded using a first intra-prediction mode, and
decoding, based on the determining, the bitstream,
wherein in the first intra-prediction mode, reference pixels used by the current video block exclude a pixel from an adjacent block on an upper right side of the current video block.

15. The method according to claim 14, wherein the decoding the bitstream, comprises:

in response to a current video frame of the video comprising a first display segment to be displayed and a second display segment not to be displayed, determining a to-be-decoded region corresponding to the first display segment,
decoding the bitstream based on the to-be-decoded region.

16. The method according to claim 15, wherein the determining a to-be-decoded region corresponding to the first display segment, comprises: determining the to-be-decoded region, based on an encoding direction of the video, a partitioning direction between the first display segment and the second display segment, a total number of pixels in the first display segment, and a size of a coding unit of the video.

17. The method according to claim 16, wherein the determining the to-be-decoded region based on an encoding direction of the video, a partitioning direction, a total number of pixels in the first display segment, and a size of a coding unit of the video, comprises:

in response to the encoding direction of the video being perpendicular to the partitioning direction,
determining a total number of coding units for each line of the to-be-decoded region by applying a function to a ratio between the total number of pixels of the first display segment and the size of the coding unit.

18. The method according to claim 16, wherein the determining the to-be-decoded region based on an encoding direction of the video, a partitioning direction, a total number of pixels in the first display segment, and a size of a coding unit of the video, comprises: in response to the encoding direction being parallel to the partitioning direction, determining a total number of coding unit lines of the to-be-decoded region by applying a function to a ratio between the total number of pixels of the first display segment and the size of the coding unit.

19. The method according to claim 17 or 18, wherein the function is an up-rounding function.

20. A video data processing apparatus, comprising:

a determination module configured for determining, for a current video block of a video, that a first intra-prediction mode is used for coding; and

a performing module configured for, based on the determination, performing a conversion between the current video block and a bitstream of the video,

wherein in the first intra-prediction mode, reference pixels used by the current video block exclude a pixel from an adjacent block on an upper right side of the current video block.

21. A display apparatus, comprising a video data processing apparatus and a rollable screen,

wherein the video data processing apparatus is configured to decode a received bitstream according to the video data processing method of any one of claims 1-19 and send decoded pixel values to the rollable screen for display.

22. The display apparatus according to claim 21, wherein in response to the rollable screen comprising a display region and a non-display region in operation, the video data processing apparatus decodes the bitstream based on a size of the display region.

23. The display apparatus according to claim 21, further comprising a rollable state judgment apparatus, wherein the rollable state judgment apparatus is configured to detect a size of a display region of the rollable screen and transmit the size of the display region to the video data processing apparatus such that the video data processing apparatus decodes the bitstream based on the size of the display region.

24. A video data processing apparatus, comprising:

a processor; and

a memory, comprising one or more computer program modules,

wherein the one or more computer program modules are stored in the memory and configured to be executed by the processor, the one or more computer program modules comprising instructions for performing the video data processing method according to any one of claims 1-19.

25. A computer-readable storage medium having stored thereon computer instructions, wherein the instructions, when executed by a processor, implement steps of the video data processing method according to any one of claims 1-19.

fully expanded state of
a rollable screen

partially expanded state
of a rollable screen

the non-display
region is still
decoded

Fig. 1

Source device
**102**

Video source
**104**

Memory
**106**

Video encoder
**200**

Output
interface
**108**

Destination device
**116**

Display device
**118**

Memory
**120**

Video decoder
**300**

Input interface
**122**

100

110

112

114

Fig. 2

Fig. 3

Fig. 4

| | | | | | | | | | | | | |
|---|---|---|---|---|---|---|---|---|---|---|---|---|
| QPI | QPI | QPI | QPI | QPI | QPI | QPI | QPI | QPI | QPI | QPI | QPI | QPI |

POC   0    1    2    3    4    5    6    7    8    9    10    11    12

EOC   0    1    2    3    4    5    6    7    8    9    10    11    12

Fig. 5

Current picture

POC   0   1   2   3   4   5   6   7   8   9   10   11   12   13   14   15   16   17   18   19   20

EOC   0   1   2   3   4   5   6   7   8   9   10   11   12   13   14   15   16   17   18   19   20

Fig. 6

adjacent reference block

Intra-prediction encoding

current coding block

I frame

Fig. 7A

Fig. 7B

Fig. 7C

10

determining, for a current video block of a video, that a first intra-prediction mode is used for coding ∿ S101

based on the determining, performing a conversion between the current video block and a bitstream of the video. In the first intra-prediction mode, reference pixels used by the current video block exclude a pixel from an adjacent block on an upper right side of the current video block ∫ S102

Fig. 8

Rolling process

Fig. 9

Fig. 10A                    Fig. 10B

<u>30</u>

```
┌─────────────────────────────────────────────────┐
│                                                 │  ～⁀ S301
│           receiving a bitstream of a video       │
│                                                 │
└─────────────────────────────────────────────────┘
                        │
                        ▼
┌─────────────────────────────────────────────────┐
│                                                 │
│  determining that a current video block of the   │  ～⁀ S302
│  video is coded using a first intra-prediction    │
│  mode                                           │
└─────────────────────────────────────────────────┘
                        │
                        ▼
┌─────────────────────────────────────────────────┐
│                                                 │      S303
│  decoding, based on the determining, the          │ ⁀～
│  bitstream, and reference pixels used by the       │
│  current video block excluding a pixel from an     │
│  adjacent block on an upper right side of the      │
│  current video block                             │
└─────────────────────────────────────────────────┘
```

Fig. 11

Fig. 12

employing an encoding process that defines a range of a reference pixel of a current video block ⌇ S201

obtaining a quantity of pixels when the rollable screen is not rolled up ⌇ S202

receiving, by a decoding end, a bitstream of a video ⌇ S203

setting a to-be-decoded region according to a rotational axis direction of the rollable screen and an encoding direction of the video ⌇ S204

decoding the set region, and filling an undecoded region ⌇ S205

sending the result to a display terminal for display ⌇ S206

Fig. 13

40

Determining module 401

Performing module 402

Fig. 14

90

Processor
910

920

Computer program
module 921

Fig. 15

**600**

601 Processor

602 ROM

603 RAM

604 Bus

605 I/O interface

606 Input apparatus

607 Output apparatus

608 Memory

609 Communication apparatus

610 Driver

611 Removable medium

Fig. 16

70

Computer
instruction 111

Fig. 17

## INTERNATIONAL SEARCH REPORT

| International application No. |
|---|
| **PCT/CN2023/133139** |

| A. | CLASSIFICATION OF SUBJECT MATTER |
|---|---|

H04N19/105(2014.01)i; G09G3/00(2006.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; WPABSC; ENTXTC; DWPI; VEN; WOTXT; USTXT; ENTXT; CNKI; IEEE: 不可用, 不使用, 不允许, 部分, 参考, 拆分, 分区, 滑卷, 划分, 解码, 禁用, 禁止, 排除, 区域, 图像, 显示, 限制, 移除, 右上, 预测, 折叠, 帧, 帧间, 帧内, Not available, not used, not allowed, partial, reference, split, partition, scroll, partition, decode, disable, prohibit, exclude, region, image, display, restrict, remove, top right, predict, fold, frame, inter, intra

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020255688 A1 (CANON K. K.) 24 December 2020 (2020-12-24) description, paragraphs 12-102 | 1-14, 20, 24, 25 |
| Y | WO 2020255688 A1 (CANON K. K.) 24 December 2020 (2020-12-24) description, paragraphs 12-102 | 15-19, 21-23 |
| Y | US 2022122500 A1 (HUAWEI TECHNOLOGIES CO., LTD.) 21 April 2022 (2022-04-21) description, paragraphs 82-260 | 15-19, 21-23 |
| A | US 2015160840 A1 (LG ELECTRONICS INC.) 11 June 2015 (2015-06-11) entire document | 1-25 |
| A | CN 113196768 A (SONY CORP.) 30 July 2021 (2021-07-30) entire document | 1-25 |
| A | US 2018278948 A1 (QUALCOMM INC.) 27 September 2018 (2018-09-27) entire document | 1-25 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 February 2024** | **18 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/133139**

**C.    DOCUMENTS CONSIDERED TO BE RELEVANT**

| Category* | Citation of document, with indication, where appropriate, of the relevant passages | Relevant to claim No. |
|---|---|---|
| A | US 2021201723 A1 (LG DISPLAY CO., LTD.) 01 July 2021 (2021-07-01)<br>entire document | 1-25 |

Form PCT/ISA/210 (second sheet) (July 2022)

## INTERNATIONAL SEARCH REPORT
### Information on patent family members

International application No.

**PCT/CN2023/133139**

| Patent document cited in search report | | | Publication date (day/month/year) | Patent family member(s) | | | Publication date (day/month/year) |
|---|---|---|---|---|---|---|---|
| WO | 2020255688 | A1 | 24 December 2020 | JP | 2021002722 | A | 07 January 2021 |
| US | 2022122500 | A1 | 21 April 2022 | US | 11508277 | B2 | 22 November 2022 |
| | | | | WO | 2020169036 | A1 | 27 August 2020 |
| | | | | EP | 3905233 | A1 | 03 November 2021 |
| | | | | EP | 3905233 | A4 | 13 April 2022 |
| US | 2015160840 | A1 | 11 June 2015 | WO | 2015088101 | A1 | 18 June 2015 |
| | | | | US | 9304670 | B2 | 05 April 2016 |
| | | | | KR | 20150066727 | A | 17 June 2015 |
| | | | | KR | 102133844 | B1 | 14 July 2020 |
| CN | 113196768 | A | 30 July 2021 | EP | 3902259 | A1 | 27 October 2021 |
| | | | | EP | 3902259 | A4 | 07 September 2022 |
| | | | | WO | 2020129698 | A1 | 25 June 2020 |
| | | | | SG | 11202103327 | SA | 28 May 2021 |
| | | | | US | 2021392354 | A1 | 16 December 2021 |
| | | | | US | 11800123 | B2 | 24 October 2023 |
| | | | | MX | 2021006944 | A | 24 August 2021 |
| | | | | JPWO | 2020129698 | A1 | 04 November 2021 |
| | | | | JP | 7409320 | B2 | 09 January 2024 |
| | | | | CA | 3121322 | A1 | 25 June 2020 |
| | | | | AU | 2019407687 | A1 | 10 June 2021 |
| | | | | BR | 112021011507 | A2 | 31 August 2021 |
| US | 2018278948 | A1 | 27 September 2018 | WO | 2018174992 | A1 | 27 September 2018 |
| US | 2021201723 | A1 | 01 July 2021 | US | 11250749 | B2 | 15 February 2022 |
| | | | | KR | 20210085200 | A | 08 July 2021 |

Form PCT/ISA/210 (patent family annex) (July 2022)